# EUROPÄISCHE PATENTSCHRIFT

(11) **EP 1 155 890 B1**
(45) Veröffentlichungstag und Bekanntmachung des Hinweises auf die Patenterteilung: **01.12.2004**
(21) Anmeldenummer: 01111191.1
(22) Anmeldetag: 11.05.2001
(51) Int. Cl.: B60J 7/06

(54) **Fahrzeugfaltverdeck**
Foldable top for vehicle
Toit pliant pour véhicule

(30) Priorität: 16.05.2000 DE 10023865
(43) Veröffentlichungstag der Anmeldung: 21.11.2001
(73) Patentinhaber: Webasto Vehicle Systems International GmbH, 82131 Stockdorf (DE)
(72) Erfinder: Dintner, Thomas, 82256 Fürstenfeldbruck (DE); Reinsch, Burkhard, 87600 Kaufbeuren (DE)
(74) Vertreter: Konnerth, Dieter Hans

(56) Entgegenhaltungen:
- EP-A- 0 845 377
- DE-C- 19 526 879

## Beschreibung

Die Erfindung betrifft ein Fahrzeugfaltverdeck mit einer Dachspitze mit den, in EP 0 845 377 A2 offenbarten Merkmalen des Oberbegriffs des Anspruchs 1.

Aus der EP 0 755 815 A1 ist ein Faltdach für Fahrzeuge bekannt geworden, das zum wahlweisen Verschließen oder mindestens teilweisen Freigeben einer in einer festen Dachfläche ausgebildeten Dachöffnung ein faltbares Verdeck aufweist, dessen vorderes Ende in Form eines vorderen Endspriegels eine Dachspitze bildet, die entlang in Fahrzeuglängsrichtung verlaufender Führungsschienen verstellbar geführt und in der Schließstellung des Daches mit ihrer Vorderkante an ein dachfestes Widerlager angedrückt ist. An den Führungsschienen ist jeweils ein mit einem Antriebskabel fest verbundener Schlitten geführt, der über einen Schwenkhebel mit einem Vorderende der Dachspitze gekoppelt ist. Der Schwenkhebel ist an einer Führungsbahn der Führungsschiene derart geführt, daß er im Verstellbereich des Faltdaches zwischen der Offenstellung und einer Zwischenstellung nahe der Schließstellung eine rein translatorische Bewegung ausführt und im Bereich zwischen der Zwischenstellung und der Schließstellung eine kombinierte Translations- und Rotationsbewegung ausführt. Durch die Rotation des Schwenkhebels wird die an ihrem Hinterende auf dem Schlitten aufliegende und mit ihrer Vorderkante aufgerichtete Dachspitze an ihrem Vorderende abgesenkt und durch die kombinierte Translations- und Rotationsbewegung an eine Anlagefläche oder eine Rahmendichtung des Dachrahmens mit hoher Kraft angepreßt. Der Schwenkhebel steuert einerseits durch seinen Eingriff in die Führungsbahn die Ausstell- oder Absenkbewegung der Vorderkante der Dachspitze und leitet andererseits die Kraft zum Andrücken der Vorderkante der Dachspitze auf die Dachspitze ein.

Aus der EP 0 845 377 A2 ist ein gattungsgemäßes Fahrzeugfaltverdeck bekannt geworden, bei dem eine Koppeleinrichtung zwischen der Dachspitze und dem Antriebsteil von zwei horizontal in der Dachspitze aufgenommenen und an der Dachspitze schwenkbar gelagerten Lenkern gebildet ist, die miteinander in Gleiteingriff stehen. Der erste Lenker ist mit dem Antriebsteil fest gekoppelt und stützt sich an dem zweiten Lenker ab, der zum Einleiten der kraftübersetzten Schließbewegung aus einer festen Kopplung am Antriebsteil gelöst und an einer Ausnehmung der Führungsschiene festgelegt wird.

Es ist eine Aufgabe der Erfindung, ein eingangs genanntes Fahrzeugfaltverdeck zu schaffen, dessen Schließmechanismus zum Spannen und Andrücken der Dachspitze gegen den Windlauf eine hohe Kraftübersetzung aufweist.

Die Aufgabe wird bei dem eingangs genannten Fahrzeugfaltverdeck erfindungsgemäß dadurch gelöst, daß die Koppeleinrichtung zwei miteinander gelenkig verbundene Kniehebel aufweist, von denen der vordere Kniehebel an dem Schlitten und der hintere Kniehebel an dem Antriebsteil schwenkbar gelagert ist, und daß durch eine zwangsweise eingeleitete Ausschwenkung der Kniehebel am mittleren Kniehebelgelenk die Untersetzung der Antriebsbewegung des Schlittens erfolgt.

Vorteilhafte Ausgestaltungen der Erfindung sind in den Unteransprüchen angegeben.

Zweckmäßigerweise schwenkt ein an der Führungsschiene gebildeter Auslenkkurvenabschnitt das Kniehebelgelenk zwangsweise aus.

Wenn der vordere Kniehebel eine Haltenase für einen Eingriff an einer Abstützung an der Führungsschiene aufweist, kann diese als kraftübersetzender Hebel beim Schließen des Dachelements verwendet werden.

Bevorzugt ist ein Lagerbolzen des hinteren Kniehebels in der Schließstellung der Dachspitze in einer Auslenkführung abgestützt angeordnet. Wenn Windkräfte auf die Dachspitze einwirken, so werden diese durch den in der Auslenkführung abgestützten Kniehebel abgestützt. Somit werden keine Reaktionskräfte auf ein Antriebskabel oder einen Antriebsmotor eingeleitet.

Zweckmäßigerweise ist das Antriebsteil ein Antriebsschlitten, der über ein Antriebskabel mit einem Antriebsmotor verbunden ist.

Wenn jede Koppeleinrichtung an dem linken bzw. dem rechten Dachseitenholm eine Ausgleichseinrichtung für einen Spielausgleich zwischen den am rechten und am linken Dachseitenholm angeordneten Schlitten aufweist, so kann die Dachspitze stets gleichmäßig an den Windlauf angedrückt werden, ohne daß einseitige Überlastungen auftreten können.

Eine bevorzugte Ausgestaltung sieht vor, daß der Lagerbolzen des hinteren Kniehebels in einer an dem Antriebsteil gebildeten Führung verschiebbar aufgenommen ist, so daß das Antriebsteil bei ruhendem Schlitten eine Ausgleichsbewegung ausführen kann, bei der der Lagerbolzen in der Auslenkführung bewegt ist.

Nachfolgend wird ein Ausführungsbeispiel des Fahrzeugfaltverdecks unter Bezugnahme auf Zeichnungen näher erläutert. Es zeigt:
- Fig. 1: in einer perspektivischen Gesamtansicht ein ein Faltdach aufweisendes Klappverdeck eines Cabriolets in Schließstellung des Faltdaches;
- Fig. 1a: in einer perspektivischen Gesamtansicht das Klappverdeck in einer Zwischenöffnungsstellung des Faltdaches;
- Fig. 1b: in einer perspektivischen Gesamtansicht das Klappverdeck mit geöffnetem Faltdach;
- Fig. 1c: in einer perspektivischen Gesamtansicht das Klappverdeck mit geöffnetem Faltdach und einem einschwenkenden Seitenholm;
- Fig. 2: in einer perspektivischen Innenansicht einen Vorderabschnitt eines Dachseitenholms des Faltdaches;
- Fig. 3: in einer perspektivischen Innenansicht den Vorderabschnitt des Dachseitenholms mit veränderter Stellung einer Dachspitze (Teilöffnung);
- Fig. 3a: in einer Seitenansicht in schematischer Darstellung die Dachspitze in zwei überlagerten Bewegungsstellungen;
- Fig. 4: in einer perspektivischen Draufsicht einen Vorderabschnitt des Fahrzeugfaltverdecks;
- Fig. 5: in einer Querschnittsansicht einen Windlauf mit einer Zentriereinrichtung für die Dachspitze;
- Fig. 6: in einer perspektivischen Draufsicht den Vorderabschnitt des Dachseitenholmes;
- Fig. 7: in einer perspektivischen Draufsicht den Vorderabschnitt des Dachseitenholmes mit gegenüber Fig. 6 veränderter Stellung einer Lagerung der Dachspitze;
- Fig. 8: in einer perspektivischen Draufsicht in vereinfachter Darstellung eine Kniehebelkoppel- und Verdeckspanneinrichtung in einer Offenstellung des Fahrzeugfaltverdecks;
- Fig. 9: in einer Ansicht gemäß Fig. 8 einen Steuerabschnitt für die Kniehebelkoppel- und Verdeckspanneinrichtung an einem Vorderende einer am Dachseitenholm angeordneten Führungsschiene;
- Fig. 10: in einer Ansicht gemäß Fig. 8 die Kniehebelkoppel- und Verdeckspanneinrichtung in einer weiteren Bewegungsstellung;
- Fig. 11: in einer Seitenansicht in schematischer Darstellung die Kniehebelkoppel- und Verdeckspanneinrichtung in einer Bewegungsstellung gemäß Fig. 10;
- Fig. 12: in einer Ansicht gemäß Fig. 10 die Kniehebelkoppel- und Verdeckspanneinrichtung in einer weiteren Bewegungsstellung;
- Fig. 13: in einer Seitenansicht in schematischer Darstellung die Kniehebelkoppel- und Verdeckspanneinrichtung in der Bewegungsstellung gemäß Fig. 12;
- Fig. 14: in einer Ansicht gemäß Fig. 12 die Kniehebelkoppel- und Verdeckspanneinrichtung in einer weiteren Bewegungsstellung;
- Fig. 15: in einer Seitenansicht in schematischer Darstellung die Kniehebelkoppel- und Verdeckspanneinrichtung in der Bewegungsstellung gemäß Fig. 14;
- Fig. 16: in einer Seitenansicht in schematischer Darstellung die Kniehebelkoppel- und Verdeckspanneinrichtung in einer weiteren Bewegungsstellung;
- Fig. 17: in einer Ansicht gemäß Fig. 14 die Kniehebelkoppel- und Verdeckspanneinrichtung in einer vorderen Endstellung;
- Fig. 18: in einer Seitenansicht in schematischer Darstellung die Kniehebelkoppel- und Verdeckspanneinrichtung in der vorderen Endstellung gemäß Fig. 17;
- Fig. 19: in einer perspektivischen Draufsicht das an einen Windlauf angekoppelte Vorderende des Dachseitenholmes;
- Fig. 20: in einer perspektivischen Draufsicht in Teildarstellung eine Riegeleinrichtung und eine Zentriereinrichtung am Vorderende des Dachseitenholmes;
- Fig. 21: in einer Ansicht gemäß Fig. 20 die Riegeleinrichtung in Schließstellung;
- Fig. 22: in einer perspektivischen Draufsicht die Riegeleinrichtung mit Antriebselementen;
- Fig. 23: in einer perspektivischen Draufsicht einen Hinterabschnitt der Riegeleinrichtung mit einer Koppeleinrichtung für eine vordere und eine hintere Antriebsstange und mit einem Antriebsabschnitt;
- Fig. 24: in einer weiteren perspektivischen Ansicht den Hinterabschnitt der Riegeleinrichtung mit der Koppeleinrichtung und dem Antriebsabschnitt;
- Fig. 25: in einer perspektivischen Ansicht in vergrößerter Darstellung die Koppeleinrichtung der Riegeleinrichtung bei entkoppelten Antriebsstangen bei teilweise eingeschwenktem Dachseitenholm;
- Fig. 26: in einer weiteren Ansicht die in Fig. 25 gezeigte Koppeleinrichtung bei teilweise eingeschwenktem Dachseitenholm;
- Fig. 27: in einer Oberansicht die entkoppelte Koppeleinrichtung bei teilweise eingeschwenktem Dachseitenholm;
- Fig. 28: in einer Oberansicht gemäß Fig. 27 die eingekoppelte Koppeleinrichtung;
- Fig. 29: in einer perspektivischen Ansicht den Dachseitenholm mit der Koppeleinrichtung der Antriebsstangen;
- Fig. 30: in einer perspektivischen Ansicht gemäß Fig. 29 die Koppeleinrichtung und die Antriebsstangen in einer veränderten Position;
- Fig. 31: in einer Seitenansicht in schematischer Darstellung ein Zwischenspriegel mit seiner Lagereinrichtung an einer Führungsschiene des Dachseitenholms;
- Fig. 32: in einer perspektivischen Ansicht in schematischer Darstellung ein Zwischenspriegel mit seiner Lagereinrichtung;
- Fig. 33: in einer perspektivischen Ansicht ein Antriebsteil und die Lagereinrichtung des Zwischenspriegels;
- Fig. 34: in einer Seitenansicht gemäß Fig. 31 den Zwischenspriegel mit angekoppelter Dachspitze;
- Fig. 35: in einer perspektivischen Ansicht gemäß Fig. 33 das mit der Lagereinrichtung des Zwischenspriegels gekoppelte Antriebsteil; und
- Fig. 36: in einer Seitenansicht gemäß Fig. 34 den entlang der Führungsschiene verschobenen Zwischenspriegel mit angekoppelter Dachspitze.

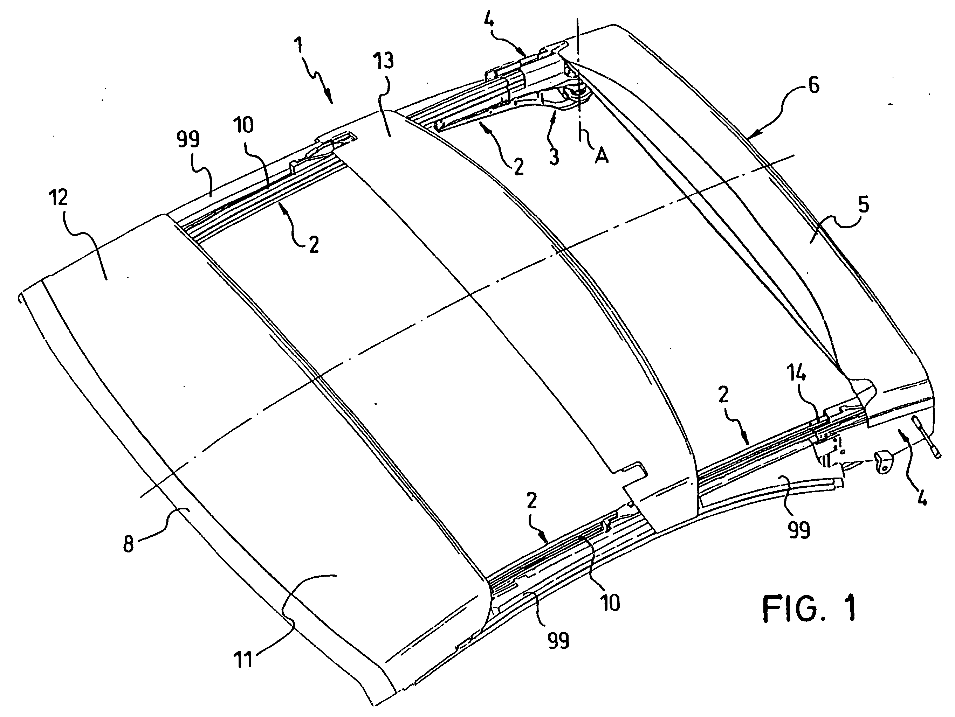

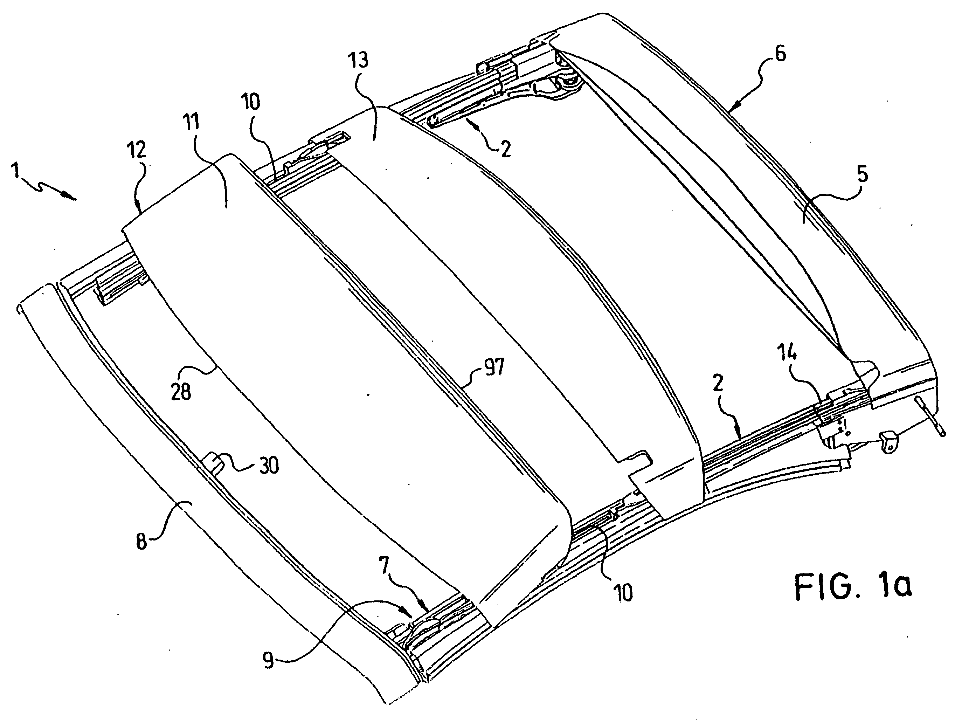

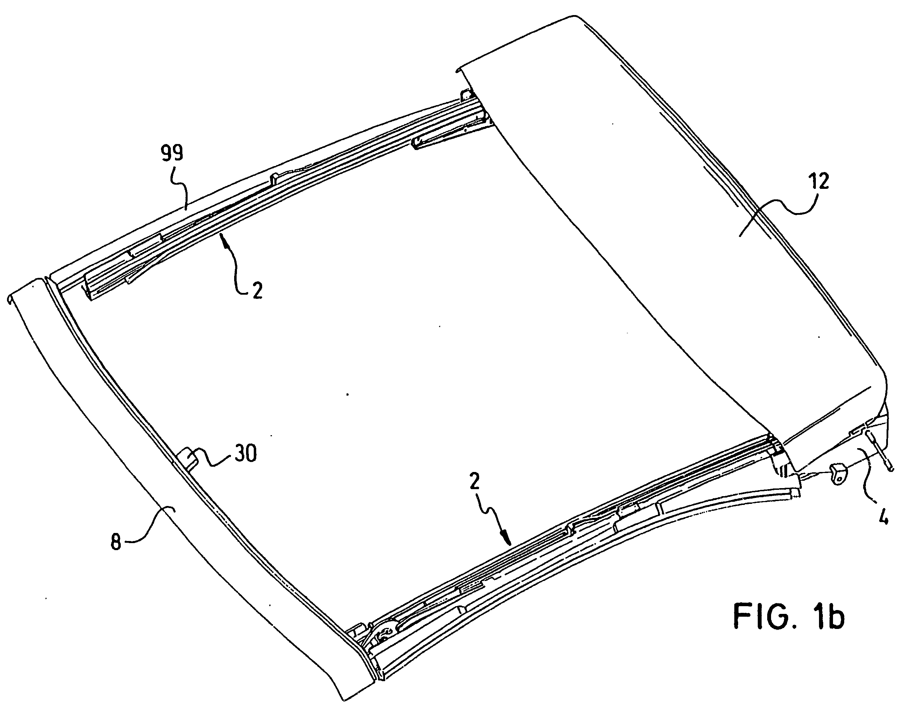

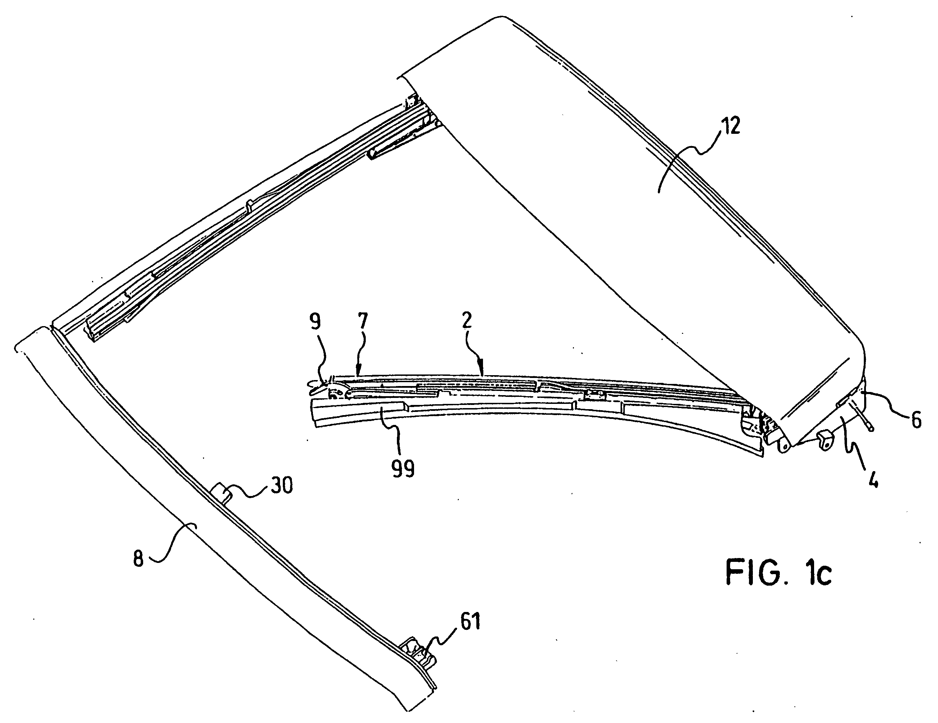

Ein Klappverdeck eines Cabriolets enthält ein Faltdach 1 mit einer Dachspitze 12, zumindest einem Zwischenspriegel 13 und einem Hauptspriegel 5 (siehe Fig. 1).

Ein Verdeckstoff (nicht dargestellt) ist an der Dachspitze 12, dem Zwischenspriegel 13 und dem Hauptspriegel 5 befestigt und im Schließzustand des Faltverdecks 1 darüber gespannt gehalten. Das Faltdach 1, das im wesentlichen symmetrisch zu einer vertikalen Längsmittelebene des Fahrzeugs aufgebaut ist (siehe Fig. 1), enthält einen Dachrahmen mit beidseitig angeordneten Dachseitenholmen 2, die an ihren Hinterenden 3 um eine in etwa vertikale Achse A schwenkbar an jeweiligen Dachrahmen-Seitenteilen 4 angebracht sind. Die beiden gegenüberliegenden Dachrahmen-Seitenteile 4 sind durch den sich quer über das Dach erstreckenden Hauptspriegel 5 fest miteinander verbunden und bilden mit diesem ein Dachrahmenhauptteil oder eine Dachkassette 6, die über eine zwischen den Dachrahmen-Seitenteilen 4 und der Karosserie angeordnete Lagerung, z. B. eine einen Hauptlenker und einen Hilfslenker aufweisende Viergelenkanordnung (nicht dargestellt), an der Karosserie schwenkbar gelagert ist und zum Ablegen des geöffneten Faltdaches 1 mit den an die Dachkassette 6 eingeschwenkten Dachrahmen-Seitenteilen 4 in einen hinteren Ablageraum versenkbar ist.

Jeder Dachseitenholm 2 ist an seinem Vorderende 7 in der Schließstellung (Fig. 1) oder in der in Fig. 1a dargestellten Teilöffnungsstellung des Faltdachs 1 an einem vorderen Querträger oder Windlauf 8 am Oberrand einer Frontscheibe oder im Bereich des Oberendes von A-Säulen angeordnet und mit einer Riegeleinrichtung 9 daran verankert.

Jeder Dachseitenholm 2 enthält einen äußeren Dichtungsflansch 99 zur dichten Anlage der Spriegel und des Verdeckstoffs und eine Führungsschiene 10, an der ein Frontspriegel 11 der Dachspitze 12 des Faltdachs 1 und der zumindest eine Zwischenspriegel 13 verschiebbar gelagert sind. Zum vollständigen Öffnen des Faltdaches 1 wird die Dachspitze 12 entlang der Führungsschiene 10 nach hinten gegen den Zwischenspriegel 13 und als Einheit mit diesem von der Führungsschiene 10 am Dachseitenholm 2 auf einen Führungsschienenabschnitt 14 an der Dachkassette 6 gefahren (siehe Fig. 1a und 1b), so daß nach dem Entriegeln der Riegeleinrichtung 9 am Vorderende 7 des Dachseitenholms 2 dieser um eine vertikale Schwenkachse A seines Schwenklagers einwärts vor die Dachkassette 6 geschwenkt werden kann (Fig. 1c). Zusammen mit dem gegenüberliegenden, ebenfalls eingeschwenkten Dachseitenholm wird die Dachkassette 6 mit dem gesamten Faltdach 1 in den Aufnahmeraum versenkt.

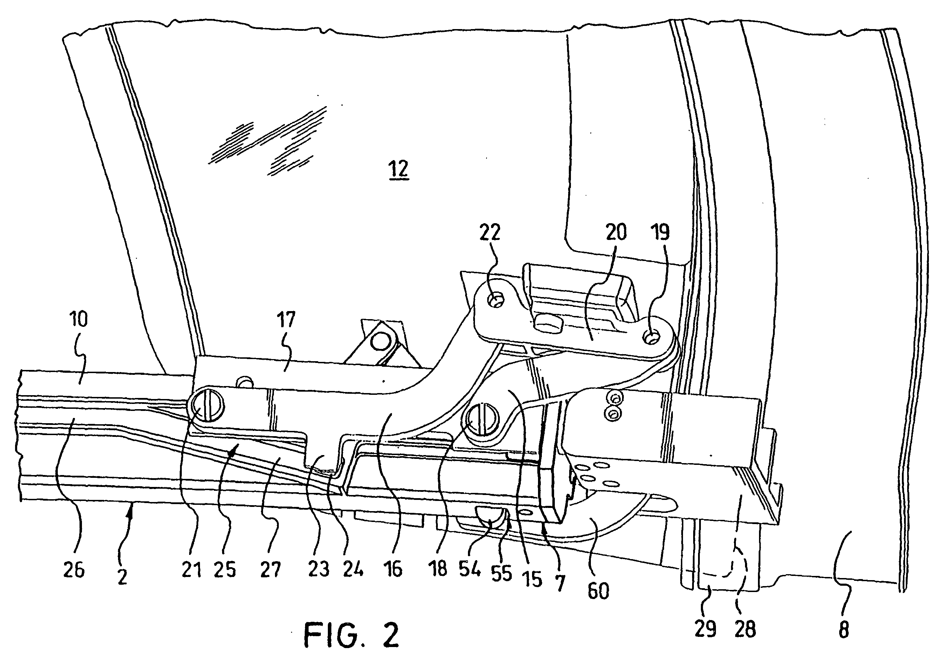

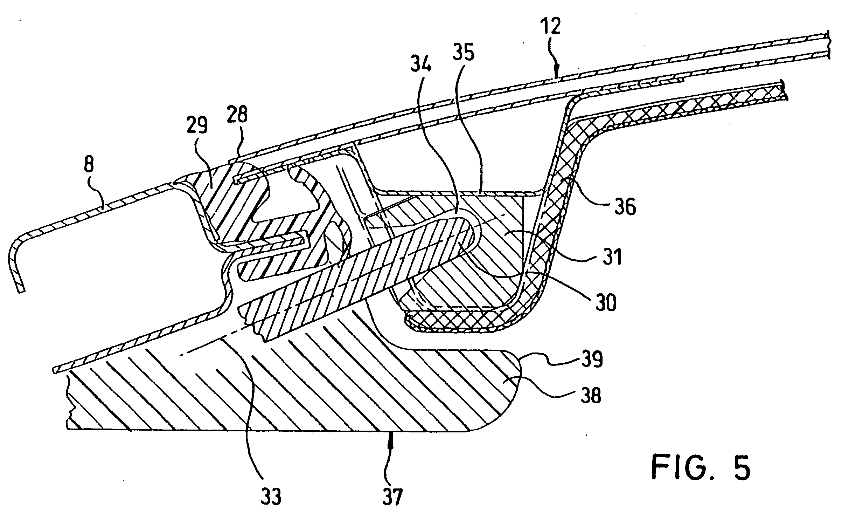

Die Dachspitze 12 ist über einen Lenker 15 und einen Steuerhebel 16 einer Viergelenkanordnung an einem Schlitten 17 schwenkbeweglich gelagert (siehe Fig. 2), der an der Führungsschiene 10 des Dachseitenholms 2 verschiebbar angebracht ist. Dabei ist der vordere Lenker 15 der Viergelenkanordnung an einem vorderen Schwenklager 18 am Schlitten 17 und an einem Schwenklager 19 an einer Halterung 20 der Dachspitze 12 gelagert. Der Steuerhebel 16 ist an einem hinteren Schwenklager 21 am Schlitten 17 und an einem Schwenklager 22 an der Halterung 20 der Dachspitze 12 gelagert und weist einen unteren Fortsatz 23 auf, an dem ein Gleitstein 24 in eine an der Führungsschiene 10 angeordnete und seitlich nach innen offene Kulissenbahn 25 eingreift. Ein Hauptabschnitt 26 der Kulissenbahn 25 verläuft im wesentlichen über die gesamte Länge parallel zu der Führungsschiene 10 für den Schlitten 17 und enthält einen vorderen Steuerabschnitt 27, der unter einem Winkel gegenüber dem Hauptabschnitt 26 in Richtung zum Vorderende 7 des Dachseitenholmes 2 abwärts verläuft. In der in Fig. 2 dargestellten Schließstellung des Faltdaches 1 ist der Schlitten 17 am Vorderende 7 der Führungsschiene 10 bzw. des Dachseitenholmes 2 angeordnet. Gleichzeitig ist der Gleitstein 24 am Vorderende des Steuerabschnitts 27 der Kulissenbahn 25 angeordnet, wodurch der Steuerhebel 16 in seine untere Schließstellung verschwenkt ist. Durch die Auslegung der Viergelenkanordnung ist eine Vorderkante 28 der Dachspitze 12 an eine Dichtung 29 am Windlauf 8 angedrückt (siehe auch Fig. 5).

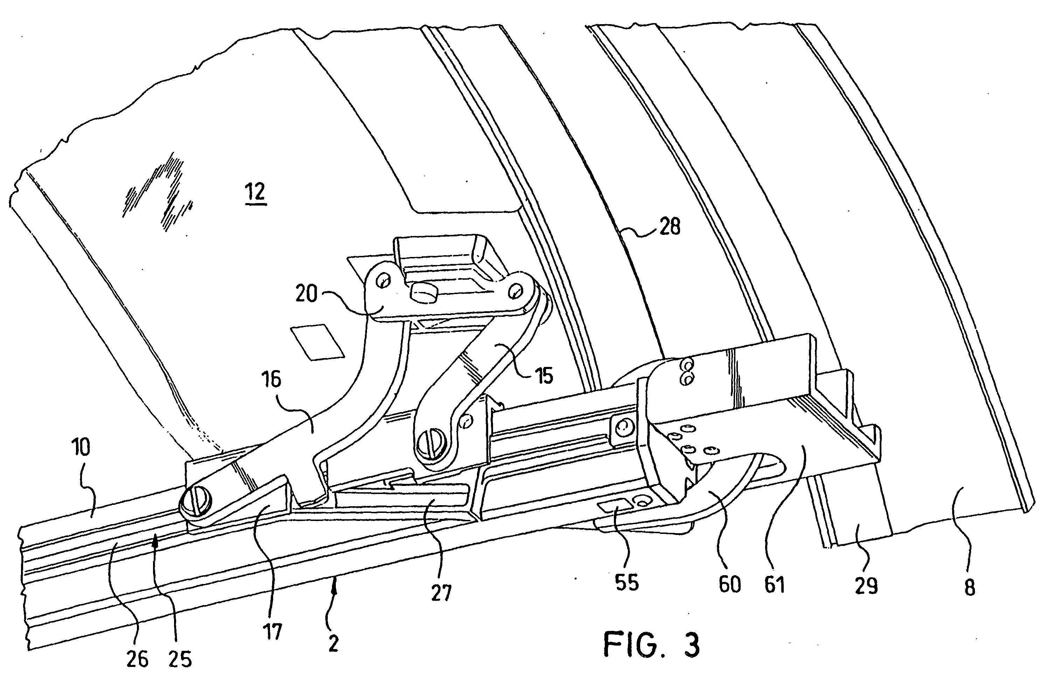

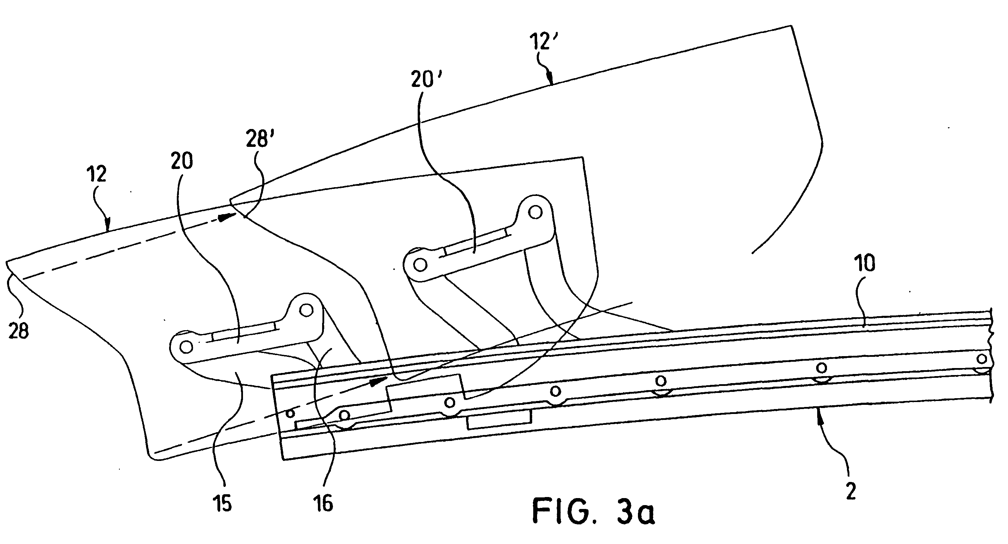

Zum Öffnen des Faltdaches 1 wird der Schlitten 17 entlang der Führungsschiene 10 nach hinten bewegt. Dabei gleitet der Gleitstein 24 im Steuerabschnitt 27 der Kulissenbahn 25 gegen den Hauptabschnitt 26 der Kulissenbahn 25 und verschwenkt den Steuerhebel 16 aufwärts bis in die in Fig. 3 gezeigte Stellung, in der die maximale Verschwenkung des Steuerhebels 16 erreicht ist, die beim weiteren Verschieben des Schlittens 17 beibehalten wird.

Durch die gewählte Auslegung der Viergelenkanordnung wird die Dachspitze 12 und insbesondere ihre Vorderkante 28 zwischen den Stellungen gemäß den Fig. 2 und 3 (die als vordere Anordnung der Dachspitze 12 und als hintere Anordnung der Dachspitze 12' mit den Vorderkanten 28 bzw. 28' in der Fig. 3a in schematischer Darstellung übereinander gezeichnet sind) durch die Überlagerung der linearen Verschiebung des Schlittens 17 und der Verschwenkung der Dachspitze 12 auf einer im wesentlichen linearen Bahnkurve geführt, die unter einem vergleichsweise kleinen spitzen Winkel zur Führungsschiene 10 verläuft und die im wesentlichen eine Tangente an die Dachhaut im Übergangsbereich vom Windlauf 8 zur geschlossenen Dachspitze 12 bildet.

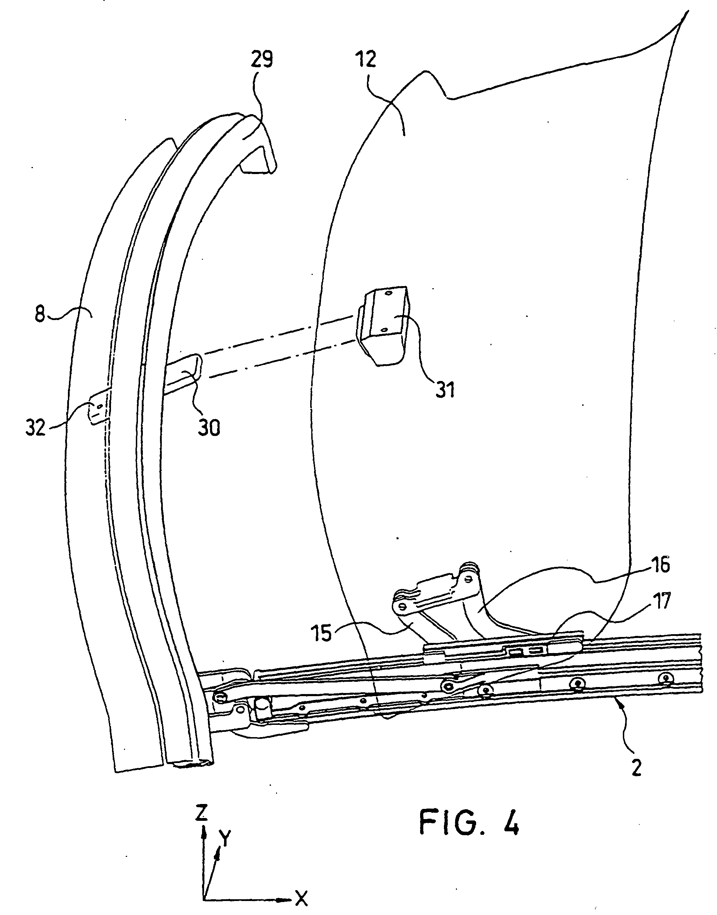

Eine Zentrier- und Abstützeinrichtung zum zentrierten Festlegen der Dachspitze 12 am Windlauf 8 (siehe Fig. 4 und 5) enthält eine in der vertikalen Fahrzeugmittelebene am Windlauf 8 angebrachte Zentrierzunge 30 und ein an der Dachspitze 12 angebrachtes Zentrierlager 31 zum zentrierten Aufnehmen der Zentrierzunge 30. Die Zentrierzunge 30 ist an einem Lagerteil 32 des Windlaufs 8 befestigt und steht unterhalb der Windlaufdichtung 29 entlang einer Ebene 33 hervor, die im wesentlichen parallel zu der anfänglichen Öffnungsbewegung der Vorderkante 28 der Dachspitze 12 angeordnet ist. Das Zentrierlager 31 weist eine vertiefte Zentrieraufnahme 34 auf, die bei geschlossener Dachspitze 12 zur Zentrierzunge 30 hin ausgerichtet ist und ein Vorderende der Zentrierzunge 30 umgreift, so daß die Mitte der Dachspitze 12 in der zur Dachaußenhaut vertikalen Richtung zentriert und gegen unerwünschte Verformung wie beispielsweise eine Ausbeulung abgestützt gehalten ist. Zusätzlich kann die Zentrierzunge 30 in dem Zentrierlager 31 an ihrer rechten und linken Seite zentriert zur vertikalen Fahrzeugmittelebene gehalten werden. Das Zentrierlager 31 ist an einer Versteifung 35 der Dachspitze 12 angebracht und von einer weichen Innenverkleidung 36 nach unten hin abgedeckt. Eine Innenverkleidung 37, die den Windlauf 8 zu den Fahrzeuginsassen hin abdeckt, steht unterhalb der Zentrierzunge 30 als Schutzwulst 38 über diese hinaus und weist eine Abrundung 39 auf, so daß beim Auftreffen eines Körperteils eines Fahrzeuginsassen die Gefahr einer Verletzung reduziert ist.

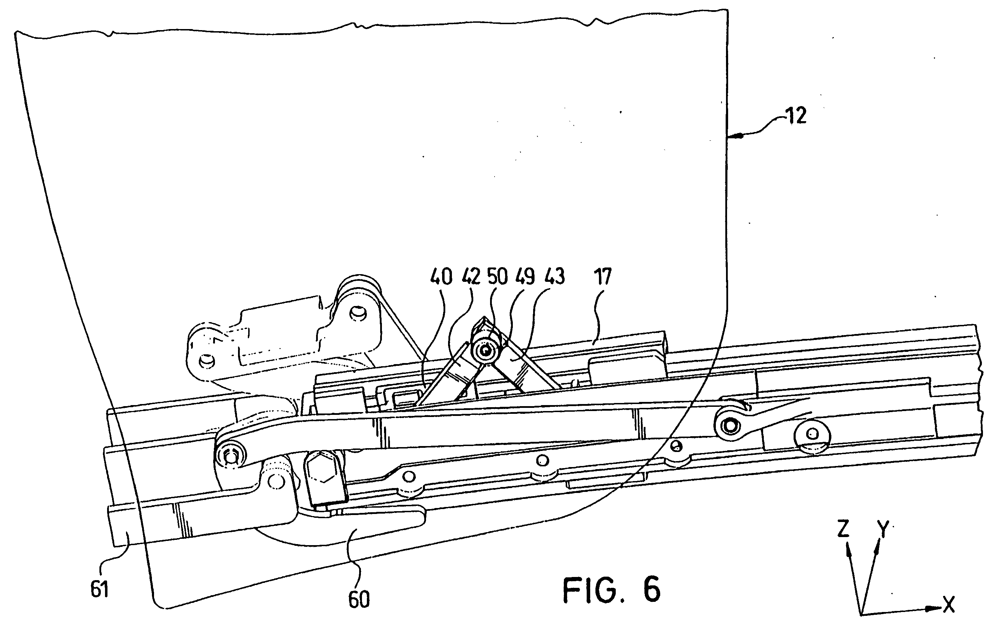

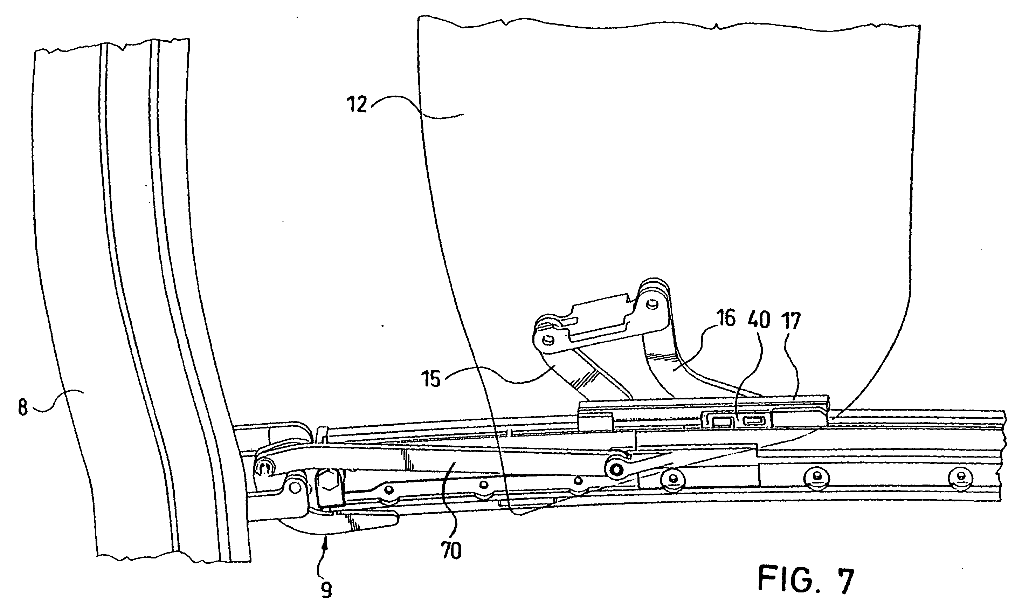

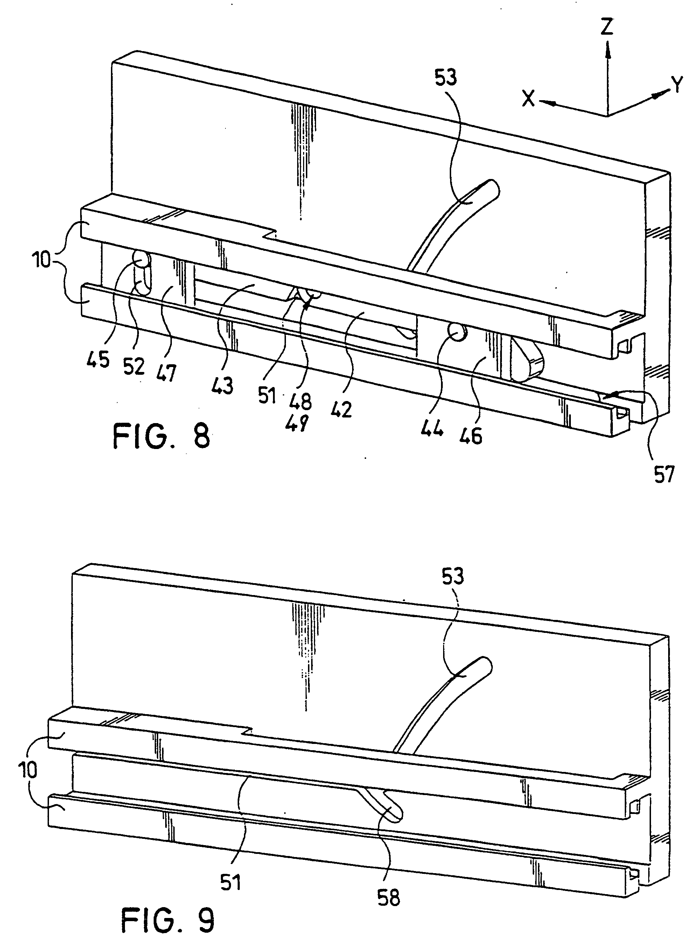

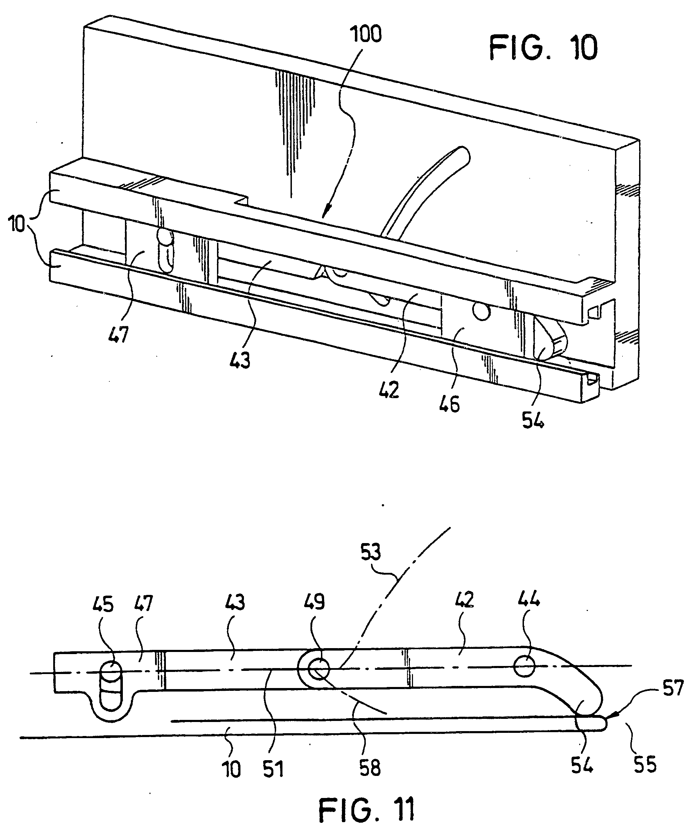

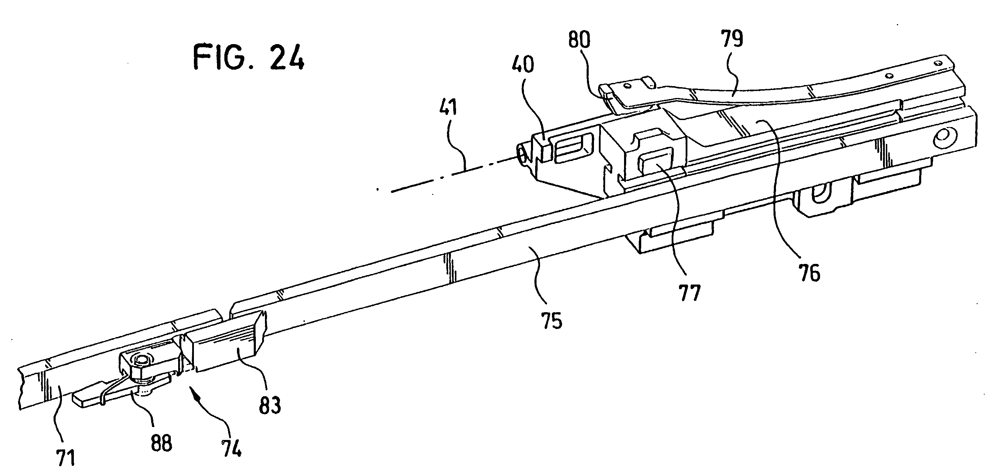

Ein an der Führungsschiene 10 verschiebbar gelagerter Antriebsschlitten 40 (siehe z. B. Fig. 6 und 7), der mit einem entlang der Führungsschiene 10 verlaufenden und von einem Antriebsmotor antreibbaren Antriebskabel 41 (siehe Fig. 24) verbunden ist und auch als Kabelanbindung bezeichnet wird, ist über eine Koppeleinrichtung mit dem die Dachspitze 12 lagernden Schlitten 17 verbunden. Die Koppeleinrichtung ist im Ausführungsbeispiel als Kniehebeleinheit gebildet und enthält einen vorderen und einen hinteren Kniehebel 42 bzw. 43, die innerhalb der Führungsschiene 10 verschiebbar aufgenommen sind (Figur 8). Der vordere und der hintere Kniehebel 42 und 43 sind einerseits jeweils mittels eines Lagerbolzens 44 bzw. 45 an einem Schlittenteil 46 des Schlittens 17 bzw. an einem Antriebsschlittenteil 47 des Antriebsschlittens 40 um jeweilige Querachsen schwenkbar gelagert und sie sind andererseits um eine, ein kniehebelgelenk bildende, mittige Schwenkachse 48 gegeneinander verschwenkbar verbunden. Die Schwenkachse 48 ist von einem Führungsbolzen 49 gebildet, der von den Kniehebeln 42, 43 seitlich auf der dem Antriebsschlittenteil 47 gegenüberliegenden Seite der Kniehebel 42, 43 hervorsteht und mit einer auf ihm gelagerten Rolle 50 (siehe Figur 6) in einer Führungsbahn 51 der Führungsschiene 10 verschiebbar aufgenommen ist (siehe Fig. 9). Der Lagerbolzen 45 des hinteren Kniehebels 43 ist in einer zur Führungsschiene 10 senkrecht verlaufenden und im Antriebsschlittenteil 47 ausgebildeten Quernut 52 aufgenommen und erstreckt sich seitlich ebenfalls bis in die Führungsbahn 51.

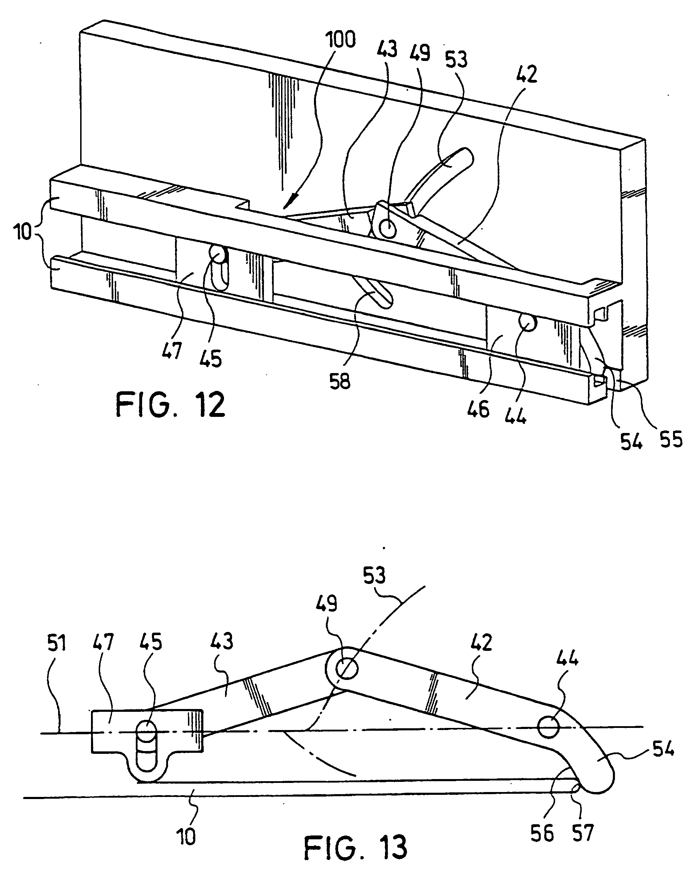

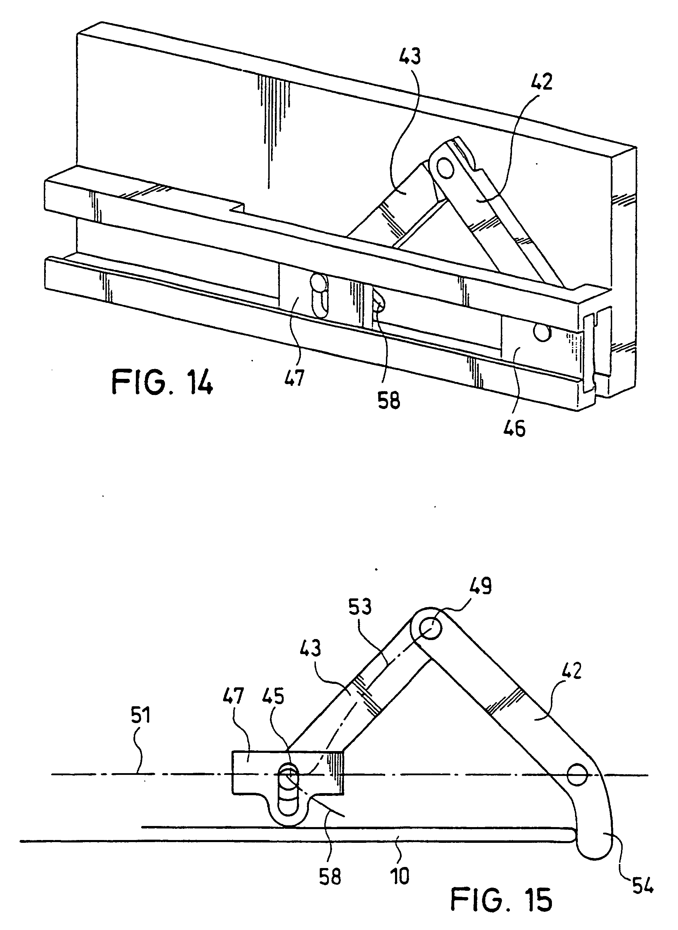

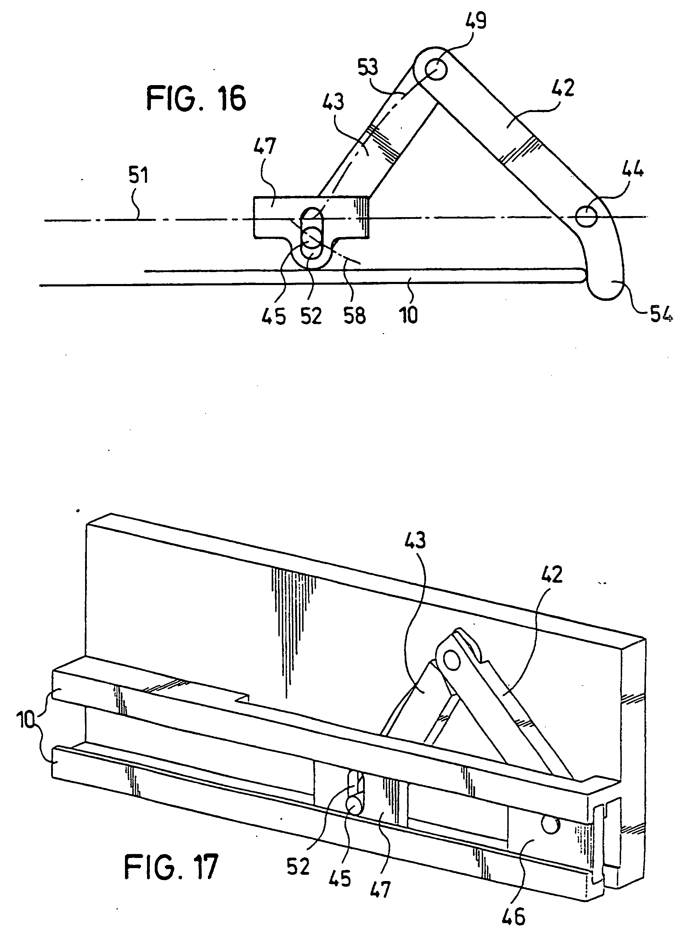

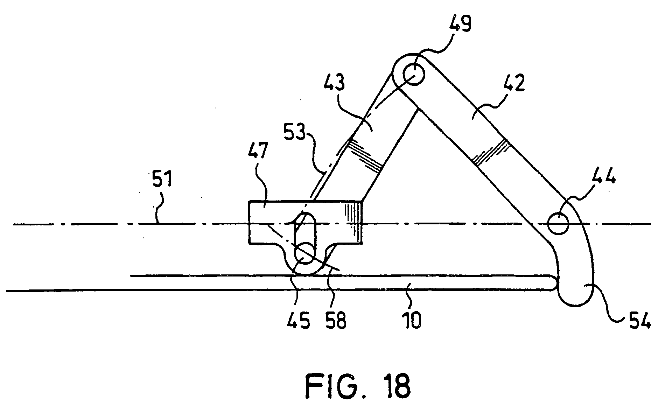

Über nahezu den gesamten Verschiebebereich der Dachspitze 12 des Faltdaches 1 nimmt die Koppeleinrichtung die in Fig. 8 gezeigte Stellung ein, in der die beiden Kniehebel 42, 43 zueinander linear und parallel zu der Führungsschiene 10 ausgerichtet gehalten sind, so daß eine starre Koppelung mit fester relativer Zuordnung zwischen dem Antriebsschlitten 40 und dem Schlitten 17 der Dachspitze 12 besteht und die Antriebsbewegung des Antriebsschlittens 40, 47 unverändert auf den Schlitten 17, 46 übertragen wird. Wenn beim Schließen des Faltdaches 1 der starr gekoppelte Schlitten 17 eine Position erreicht hat, in der sich die Dachspitze 12 unmittelbar vor ihrer Schließstellung befindet (siehe Fig. 10 und 11) und die Vorderkante 28 die Windlaufdichtung 29 entweder schon berührt hat oder kurz davor steht, folgt beim weiteren Verschieben des Antriebsschlittens 40, 47 der Führungsbolzen 49 mit seiner Rolle 50 einem schräg nach oben verlaufenden Auslenkkurvenabschnitt 53 der Führungsbahn 51, so daß die beiden Kniehebel 42, 43 um ihre Lagerbolzen 44, 45 verschwenken und eine gegenseitige Winkelstellung am Führungsbolzen 49 einnehmen (siehe Fig. 12 und 13). Gleichzeitig wird eine am vorderen Kniehebel 42 ausgebildete vordere Haltenase 54 in eine untere Öffnung 55 an der Führungsschiene 10 geschwenkt, wobei die Haltenase 54 derart gekrümmt ist, daß sich eine innere Gleitfläche 56 der Haltenase 54 an einem abgerundeten, ein Widerlager bildenden Gleitrand 57 der Führungsschiene 10 in Gleitkontakt anlegt. Durch die ausschwenkenden Kniehebei 42, 43, die sich durch eine Ausnehmung 100 an der Oberseite der Führungsschiene 10 erstrecken (siehe Fig. 12), ist die starre Kopplung aufgehoben. Entsprechend der Krümmung und Neigung des Auslenkkurvenabschnitts 53 gegenüber der Führungsschiene 10 wird somit eine Untersetzung der Bewegungsgeschwindigkeit zwischen dem Antriebsschlitten 40 und dem Schlitten 17 erzielt, so daß sie sich relativ zueinander bewegen und der Antriebsschlittenteil 47 sich dem Schlittenteil 46 annähert. Die weitere verlangsamte Bewegung des Schlittens 17 erfolgt, indem der vordere Kniehebel 42 sich über die Haltenase 54 am Gleitrand 57 der Führungsschiene 10 abstützt (siehe Fig. 12 und 13). Aufgrund des Hebelverhältnisses am vorderen Kniehebel 42, das einerseits vom Abstand zwischen dem Lagerbolzen 44 und dem Führungsbolzen 49 und andererseits vom Abstand zwischen dem Lagerbolzen 44 und der Stelle des Gleitkontakts zwischen der Haltenase 54 und dem Gleitrand 57 bestimmt ist, erfolgt eine Kraftübersetzung der über das Antriebskabel auf den Antriebsschlitten 40, 47 und von diesem auf den Schlitten 17, 46 übertragenen Kraft, die die Vorderkante 28 der Dachspitze 12 auf dem letzten Schließweg in die Dichtung 29 an den Windlauf 8 drückt. In der Schließstellung der Dachspitze 12 hat der Schlitten 17 seine vordere Endstellung mit der in den Fig. 14 und 15 gezeigten Schwenkstellung des vorderen Kniehebels 42 und dem Eingriff der Haltenase 54 in die Öffnung 55 (siehe auch Fig. 2) erreicht, während das Antriebsschlittenteil 47 eine Stellung einnimmt, in der der Lagerzapfen 45 des hinteren Kniehebels 43 am Beginn einer unteren Auslenkführung 58 steht, die sich von der linearen Führungsbahn 51 kreisbahnförmig abwärts erstreckt, wobei der gedachte Mittelpunkt der Führungsbahn 51 an der aktuellen Position des Führungsbolzens 49 liegt (siehe Fig. 15). Wird der Antriebsschlitten 40, 47 in der Schließstellung der Dachspitze 12 und des Schlittens 17, 46 noch um ein gewisses Maß weiterbewegt, so tritt der Lagerbolzen 45 in die untere Auslenkführung 58 ein, wobei der hintere Kniehebel 43 um den positionsfesten Führungsbolzen 49 verschwenkt wird. Der Lagerbolzen 45 kann dabei in der Quernut 52 eine gegenüber dem Antriebsschlittenteil 47 erforderliche Ausgleichsbewegung ausführen. Die vordere Bewegungsendstellung des Antriebsschlittenteils 47 zeigen die Fig. 17 und 18.

Die beschriebene Kniehebeleinheit bildet somit eine von dem Bewegungsmechanismus der Dachspitze unabhängige Verdeckspanneinrichtung, die aufgrund der Kraftübersetzung mit der zum bloßen Verschieben der Dachspitze 12 entlang der Führungsschiene 10 bereitgestellten Antriebskraft auskommt.

Die Länge der Auslenkführung 58 ist derart festgelegt, daß beim Schließen der Dachspitze 12 an beiden Dachseitenholmen 2 ein gewisser gegenseitiger Versatz der beiden gleichzeitig angetriebenen Antriebskabel oder eine Schrägstellung der Dachspitze 12 gegenüber der Fahrzeugquerachse ausgeglichen werden kann. Liegt beispielsweise die Dachspitze 12 an ihrer rechten Seite schon am Windlauf 8 bzw. der Dichtung 29 fest an, während die linke Seite noch eine geringe Wegstrecke davon entfernt ist, so wird an dem linken Dachseitenholm 2 durch eine Längsbewegung des Antriebsschlittens 40 der vordere Kniehebel 42 zum Bewegen des Schlittens 17 noch verschwenkt und am rechten Dachseitenholm 2 eine gleichzeitige Längsbewegung des dortigen Antriebsschlittens 40, 47 lediglich in eine Verschwenkung des hinteren Kniehebels 43 ohne Bewegung des Schlittens 17, 46 und damit dieser Seite der Dachspitze 12 umgesetzt.

In der Schließstellung der Dachspitze 12, in der der Lagerzapfen 45 des hinteren Kniehebels 43 in der kreisbogenförmigen Auslenkführung 58 aufgenommen ist (siehe Fig. 16 bis 18), ist der Schlitten 17 und damit die Dachspitze 12 gegen auf die Dachspitze 12 einwirkende Kräfte, die beispielsweise durch den Fahrtwind verursacht werden und die den Schlitten 17 nach hinten in eine Öffnungsstellung verschieben wollen, verriegelt gehalten. Das hintere Ende des vorderen Kniehebels 42 ist über den hinteren Kniehebel 43, der an dem Lagerbolzen 45 senkrecht auf der kreisbogenförmigen Auslenkführung 58 abgestützt ist und durch die auf ihn eingeleitete Kraft nicht ausweichen kann, in seiner Riegelposition gehalten. Damit sind auch das Antriebskabel 41 und der Antriebsmotor entlastet.

Zum Öffnen der Dachspitze 12 wird der Antriebsschlitten 40, 47 nach hinten verfahren, so daß der Lagerbolzen 45 aus der kreisbogenförmigen Auslenkführung 58 in die lineare Führungsbahn 51 eintritt, wodurch die Verriegelung aufgehoben ist.

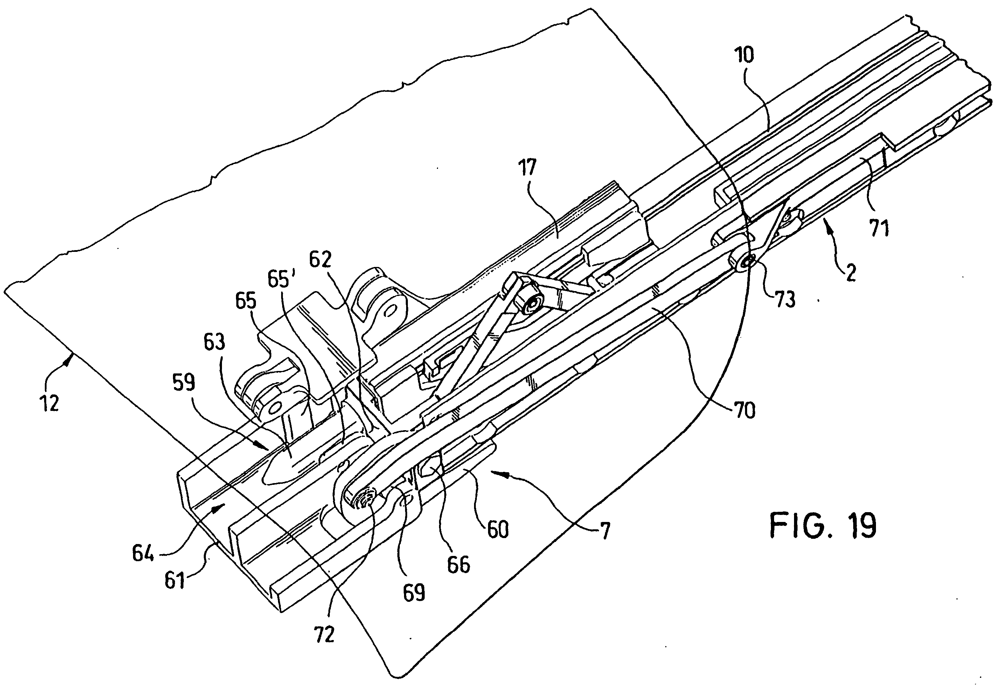

Jeder Dachseitenholm 2 ist an seinem Vorderende 7 mittels einer Seitenholm-Zentriereinrichtung 59 und einem Verriegelungshaken 60 der Riegeleinrichtung 9 an einem Windlauflager 61 festlegbar (siehe Fig. 19). Die Seitenholm-Zentriereinrichtung 59 enthält einen an der Stirnseite 62 des Dachseitenholms 2 in Längsrichtung hervorstehenden Zentrierbolzen 63, der beim Ankoppeln des Seitenholms 50 in ein Zentrierlager eingeführt wird. Das Zentrierlager weist in einem Aufnahmeraum 64 des Windlauflagers 61 zwei sich seitlich gegenüberliegende und voneinander beabstandete Stützteile 65, 65' auf, die gegeneinander hervorstehende und derart gewölbte Seiten aufweisen, daß im wesentlichen senkrechte Berührungslinien gebildet sind, an denen der Zentrierbolzen 63 an seinen gegenüberliegenden Seiten in Querrichtung in jeweiliger Punktberührung an den Stützteilen 65, 65' zentriert gehalten ist.

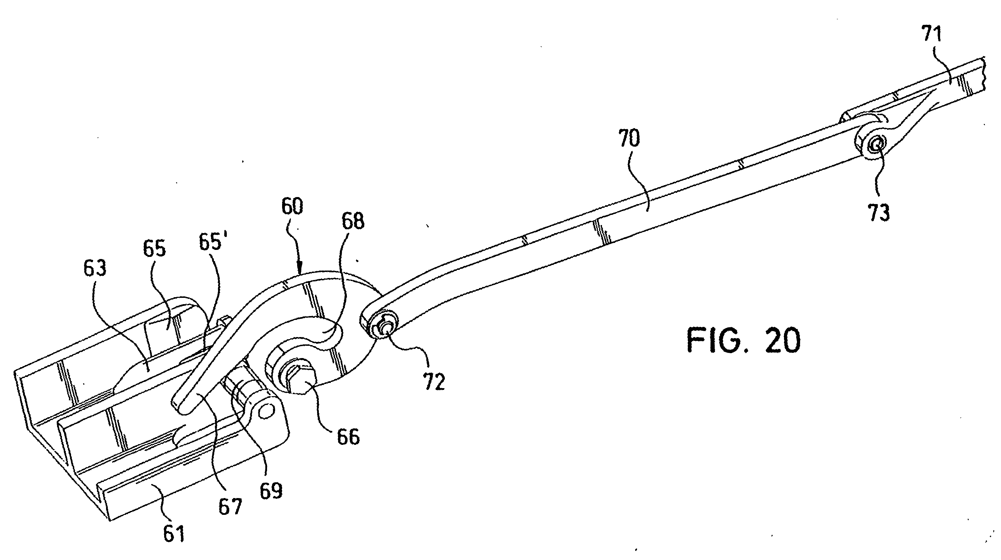

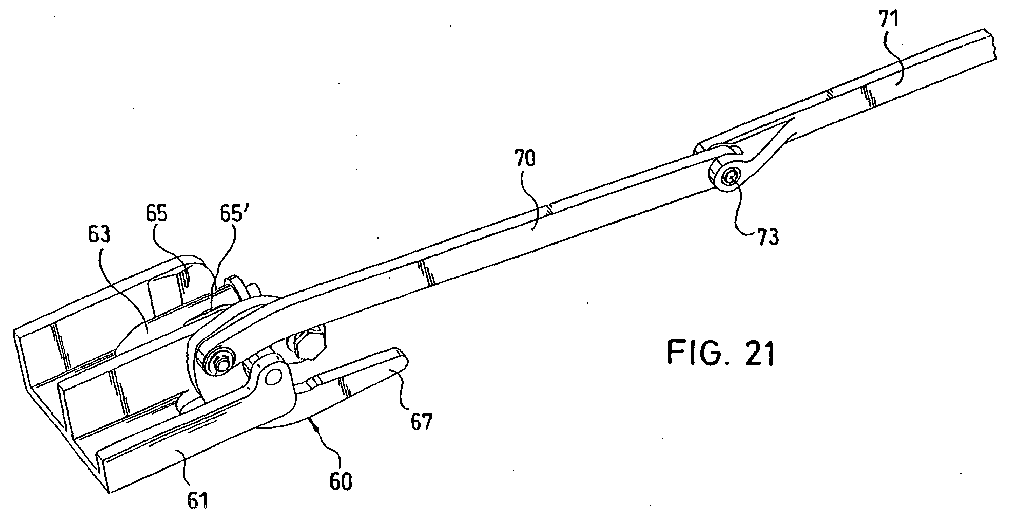

Der Verriegelungshaken 60, der an einer Drehachse 66 am Vorderende des Dachseitenholms 2 um ein Querachse schwenkbar angebracht ist, weist einen verlängerten Riegelhaken 67 und eine sich anschließende kurvenförmige Riegelaufnahme 68 zum Eingriff mit einem am Windlauflager 61 angebrachten Lagerquerbolzen 69 auf. Der Dachseitenholm 2 wird bei geöffnetem Riegelhaken 60 (siehe Fig. 20) an das Windlauflager 61 geführt, bis der Zentrierbolzen 63 an den Stützteilen 65, 65' zentriert gehalten und der Riegelhaken 60 über dem Lagerquerbolzen 69 angeordnet ist. Mittels einer Anlenkstange 70, die am Riegelhaken 60 und an einer Antriebsstange 71, die am Dachseitenholm 2 in einer Führungsbahn der Führungsschiene 10 verschiebbar gelagert ist, in jeweiligen Drehachsen 72 und 73 schwenkbeweglich gelagert ist, wird durch Längsverschiebung der Antriebsstange 71 der Riegelhaken 60 um seine Drehachse 66 nach unten verschwenkt, wobei der Lagerquerbolzen 69 in die Riegelaufnahme 68 eingeführt und darin verriegelt gehalten wird (siehe Fig. 19 und 21).

Die am schwenkbaren Dachseitenholm 2 längsverschiebbar gelagerte Antriebsstange 71 ist über eine Kupplungseinrichtung 74 mit einer am hinteren Führungsschienenabschnitt 14 der Dachkassette 6 verschiebbar gelagerten hinteren Antriebsstange 75 zur Bewegungsübertragung gekoppelt, wenn der Dachseitenholm 2 nach vorne geschwenkt ist (siehe z. B. Fig. 1a und 1b), und trennbar, wenn der Dachseitenholm 2 wieder vom Windlauf 8 gelöst und an die Dachkassette 6 eingeschwenkt wird (siehe Fig. 1c).

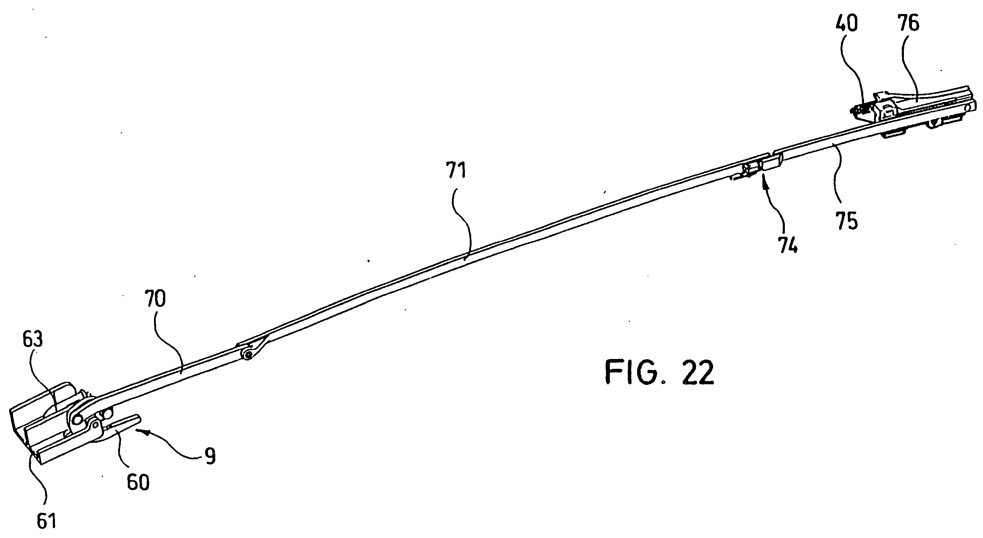

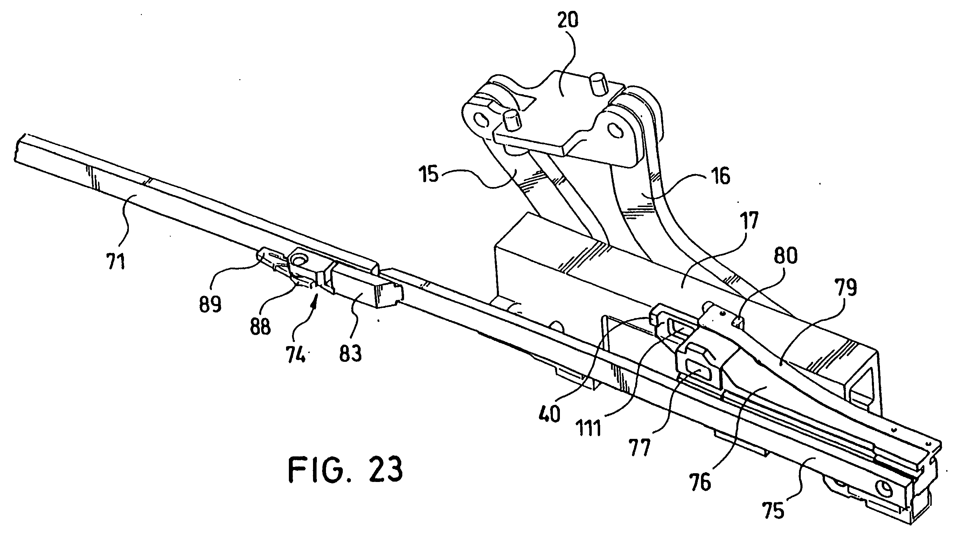

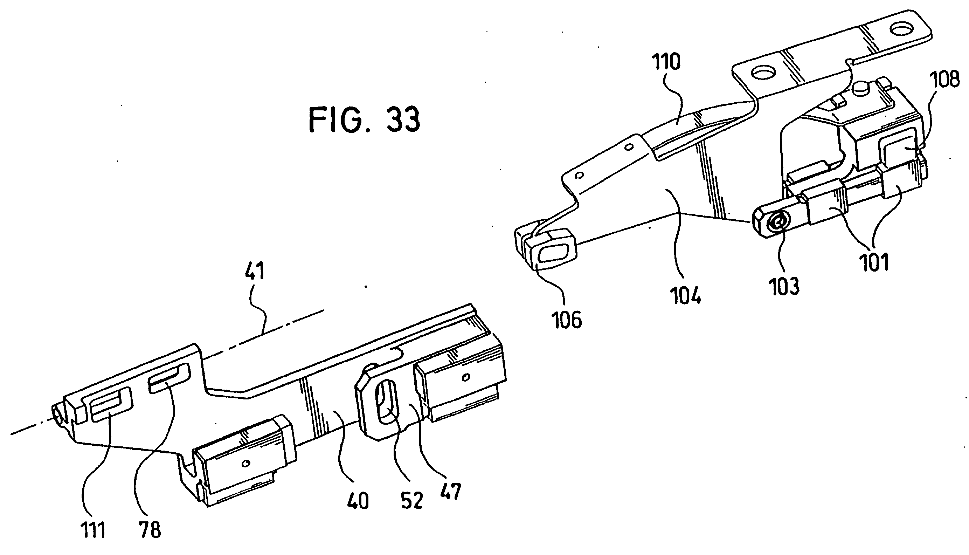

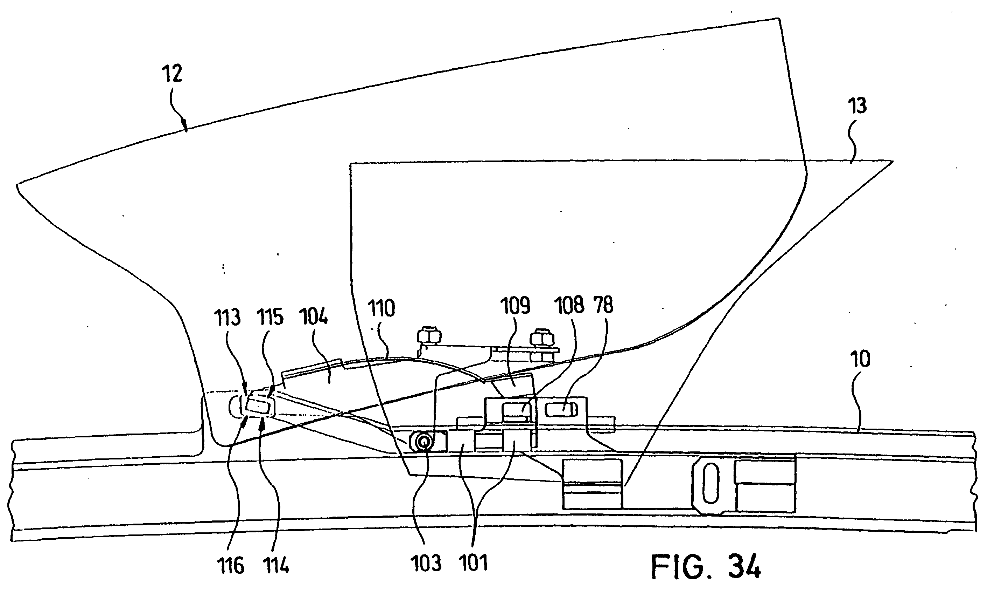

Der Antrieb der hinteren Antriebsstange 75 und somit des Verriegelungshakens 60 über die Kopplung mit der vorderen Antriebsstange 71 und der Anlenkstange 70 erfolgt über den Antriebsschlitten 40, der vom Antriebskabel gezogen ist und zusammen mit der Dachspitze 12 und dem Zwischenspriegel 13 entlang der Führungsschiene 10 nach hinten bis auf den hinteren Führungsschienenabschnitt 14 an der Dachkassette 6 verfahren ist (siehe Fig. 22 und 23, worin die Führungsschienen nicht dargestellt sind). An der hinteren Antriebsstange 75 ist ein Mitnehmer 76 befestigt, an den sich der nach hinten und neben den Mitnehmer 76 fahrende Antriebsschlitten 40 ankoppelt, beispielsweise durch einen federbelasteten Hebel oder durch einen Riegelstein 77 (siehe Fig. 23 und 24), der in dem Mitnehmer 76 senkrecht zur Verschieberichtung des Antriebsschlittens 40 bzw. zur Führungsschiene 10 verschiebbar aufgenommen ist und in eine zugeordnete Ausnehmung 78 in dem Antriebsschlitten 40 (siehe Fig. 33 und 34) verriegelnd eingreift, wenn diese in Ausrichtung zu dem Riegelstein 77 steht. Eine über eine Blattfeder 79 an dem Mitnehmer 76 federelastisch angebrachte Riegelsteinsperre 80 ist durch den Antriebsschlitten 40 außer Eingriff von dem Riegelstein 77 geschwenkt. Durch das Antriebskabel wird der Antriebsschlitten 40 weiter nach hinten verschoben, der wiederum über seine Koppelung mit dem Mitnehmer 76 die hintere Antriebsstange 75 verschiebt und über die beschriebene Koppelung den Verriegelungshaken 60 in seine Entriegelstellung verschwenkt. In dieser Stellung wird der Antriebsschlitten 40 angehalten. Der Dachseitenholm 2 wird anschließend über einen separaten Antrieb eingeschwenkt, wobei sich die vordere Antriebsstange 71 an der Kupplungseinrichtung von der hinteren Antriebsstange 75 entkoppelt.

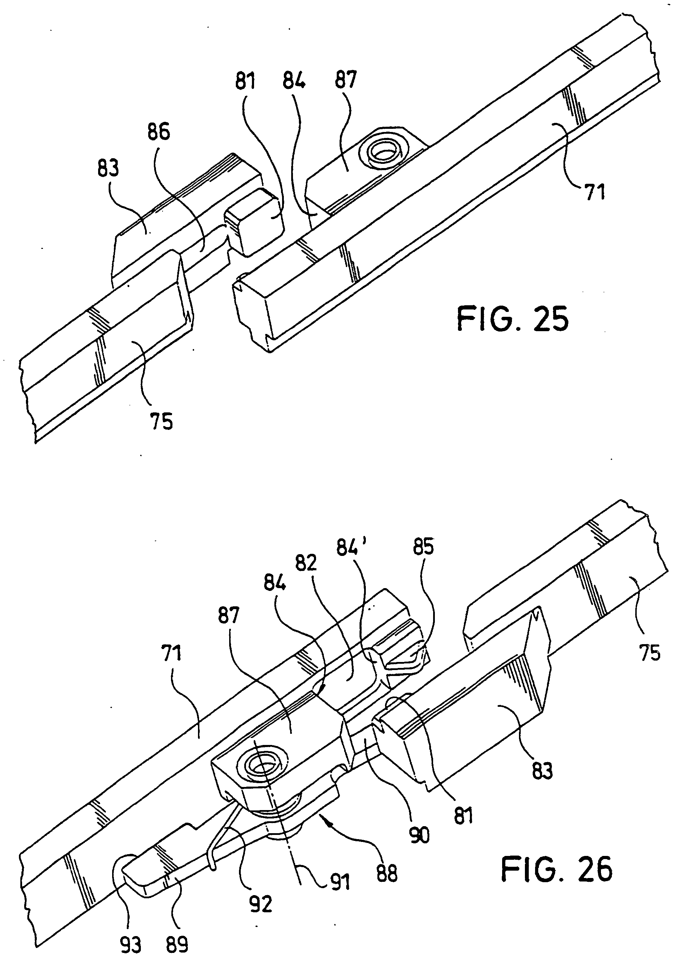

Die Kupplungseinrichtung 74 weist einen an der hinteren Antriebsstange 75 angeordneten Kupplungszapfen 81 auf (siehe Fig. 25-28), der zum kuppelnden Eingreifen und Übertragen von Zug- und Druckkräften in eine an der vorderen Antriebsstange 71 ausgebildete Kupplungsnut 82 vorgesehen ist. Der Kupplungszapfen 81 steht an einem bezüglich dem Dachseitenholm 2 außenseitigen und über das Ende der hinteren Antriebsstange 75 hinausreichenden Ansatz 83 seitlich gegen einen Endabschnitt der vorderen Antriebsstange 71 hervor. Die Kupplungsnut 82 enthält zwei in Längsrichtung beabstandete Nutbegrenzungen 84, 84', zwischen denen der Kupplungszapfen 81 aufgenommen wird und an die er sich anlegen kann. Der gegenseitige Abstand der beiden Nutbegrenzungen 84, 84' ist größer wie die Länge des Kupplungszapfens 81 in dieser Richtung und die Lagezuordnung der Nutbegrenzungen 84, 84' zu dem Kupplungszapfen 81 ist derart, daß der Kupplungszapfen 81 in der Kupplungsnut 82 mit Spiel zum Ausgleich von Bauteiltoleranzen und von Längenänderungen der Bauteile aufgrund von Wärmeausdehnungseffekten aufgenommen ist.

Am Vorderende der vorderen Antriebsstange 71 ist eine Zentriernase 85 angeordnet, die gegen den seitlichen Ansatz 83 der hinteren Antriebsstange 75 hervorsteht und in eine zugeordnete und an die Zentriernase 85 angepaßte Zentrierausnehmung 86 eingreift, die an dem seitlichen Ansatz 83 zwischen dem Kupplungszapfen 81 und der hinteren Antriebsstange 75 ausgebildet ist.

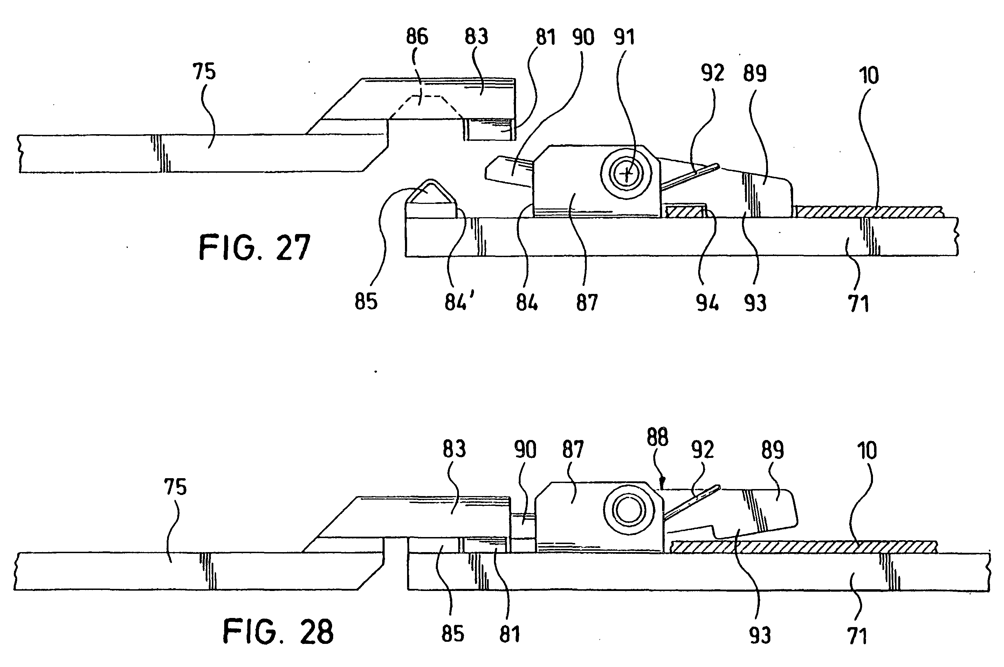

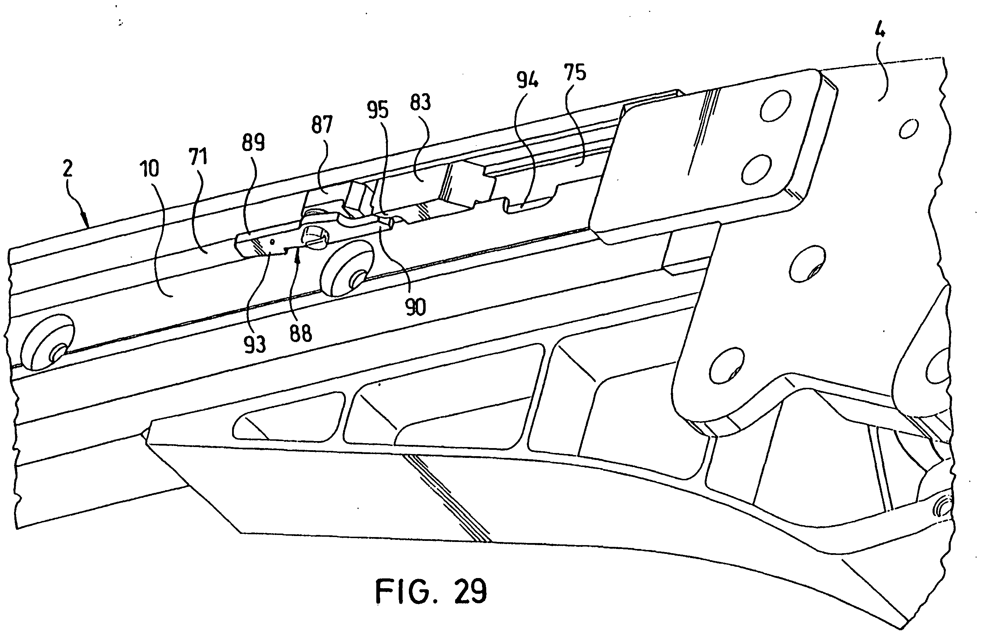

Am Hinterabschnitt der vorderen Antriebsstange 71 ist ein seitlich hervorstehender Lagerbock 87 angeordnet, an dem ein doppelseitiger Sperrhebel 88 mit zwei sich gegenüberliegenden Hebelarmen, die einen Riegelarm 89 und einen Auslösearm 90 bilden, um eine zwischen dem Riegelarm 89 und dem Auslösearm 90 liegende Schwenkachse 91 gelagert und mit einer Feder 92 vorgespannt ist, so daß der einen Riegelvorsprung 93 aufweisende Riegelarm 89 gegen die die Antriebsstange 71 umgreifende Führungsschiene 10 gedrückt ist und beim Verschieben der Antriebsstange 71 auf der Führungsstange 10 entlang gleiten kann. Die Führungsschiene 10 weist eine Ausnehmung 94 auf (siehe Fig. 27 und 29), in die der Riegelvorsprung 93 des Sperrhebels 88 bzw. der Riegelarms 89 eingreifen kann, so daß der verschwenkte Sperrhebel 88 die vordere Antriebsstange 71 gegen Verschieben am Dachseitenholm 2 blockiert hält.

Fig. 27 zeigt eine ausgekuppelte Stellung, in der der vordere Dachseitenholm (nicht dargestellt) um einen geringen Schwenkwinkel vor der eingekuppelten Stellung (siehe Fig. 28) steht (wobei jedoch in Fig. 27 in vereinfachter Darstellung die vordere und die hintere Antriebsstange 71 bzw. 75 in zueinander paralleler Anordnung gezeigt sind). Beim Einkuppeln aus dieser geringfügig verschwenkten Stellung drückt während des letzten Schwenkwegs des Dachseitenholms 2, der die vordere Antriebsstange 71 in die ausgeschwenkte Stellung gemäß Fig. 28 bewegt, in der sie in der geraden Verlängerung der hinteren Antriebsstange 75 angeordnet ist, eine an dem seitlichen Ansatz 83 der vorderen Antriebsstange 71 gebildete Betäügungsnase 95 (siehe Figur 29) gegen den Auslösearm 90 des Sperrhebels 88 und verschwenkt diesen gegen die Federkraft, wodurch der Riegelarm 89 mit seinem Riegelvorsprung 93 aus der Ausnehmung 94 herausgehoben wird, so daß die Blockierung aufgehoben ist und folglich eine Verschiebung der vorderen Antriebsstange 71 entlang dem Dachseitenholm 2 möglich ist, die ein Schließen des Verriegelungshakens 60 am Windlauf 8 bewirkt.

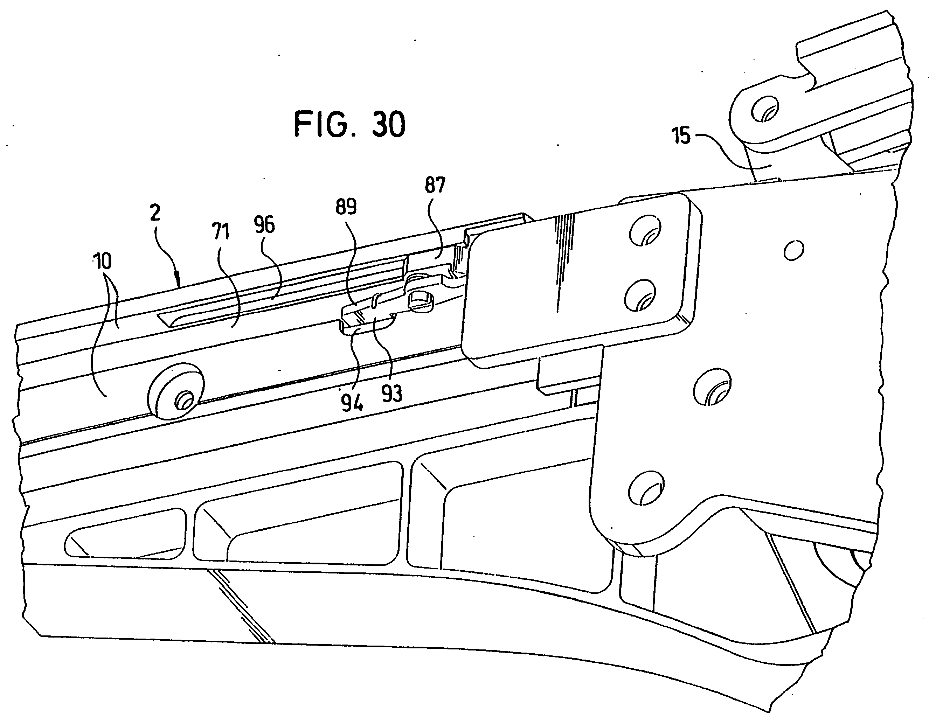

Die Fig. 29 und 30 zeigen die beiden Endstellungen der Verschiebung der vorderen und der hinteren Antriebsstange 71 bzw. 75 gegenüber der Führungsschiene 10 am vorderen Dachseitenholm 2. In Fig. 29 sind der Lagerbock 87 und der seitliche Ansatz 83, die in einer Längsnut 96 an der Führungsschiene 10 aufgenommen und in Längsrichtung verschiebbar gehalten sind, in ihrer gekoppelten Stellung in der vorderen Position, die einem geschlossenen Verriegelungshaken 60 entspricht. Wenn sich der zurückfahrende Antriebsschlitten 40 an den Mitnehmer 76 angekoppelt hat, zieht er die hintere Antriebsstange 75 nach hinten, bis die Kupplungseinrichtung 74 die in Fig. 30 gezeigte Stellung erreicht hat, in der der Ansatz 83 aus der Längsnut 96 ausgetreten ist, der Lagerbock 87 noch in der Längsnut 96 angeordnet ist und der Riegelarm 89 mit dem Riegelvorsprung 93 in die Ausnehmung 94 einschwenkt (wie dies vorweg schon dargestellt ist), wenn der Dachseitenholm 2 mit der vorderen Antriebsstange 71 in Richtung an die Dachkassette 6 eingeschwenkt wird.

Beim Öffnen des Faltdaches 1 wird die Dachspitze 12 durch den bewegten Antriebsschlitten 40 nach hinten in Richtung zur Dachkassette 6 verschoben (siehe Fig. 1 und 31 bis 33). Dabei wird die Dachspitze 12 anfangs auf dem ersten Bewegungsweg wie oben beschrieben durch den vorderen Lenker 15 und den Steuerhebel 16 der Viergelenkanordnung mit angehobener Hinterkante 97 schräggestellt, wobei die Vorderkante 28 von dem seitlichen Dichtungsflansch 99 abgehoben wird und eine weitere Verschiebung der Dachspitze 12 gewährleistet ist, und gleichzeitig gegen den feststehenden Zwischenspriegel 13 gefahren.

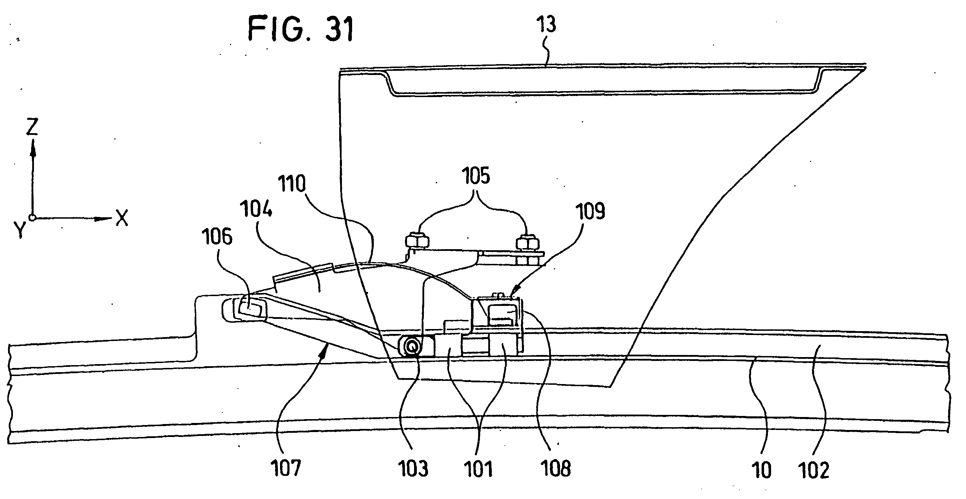

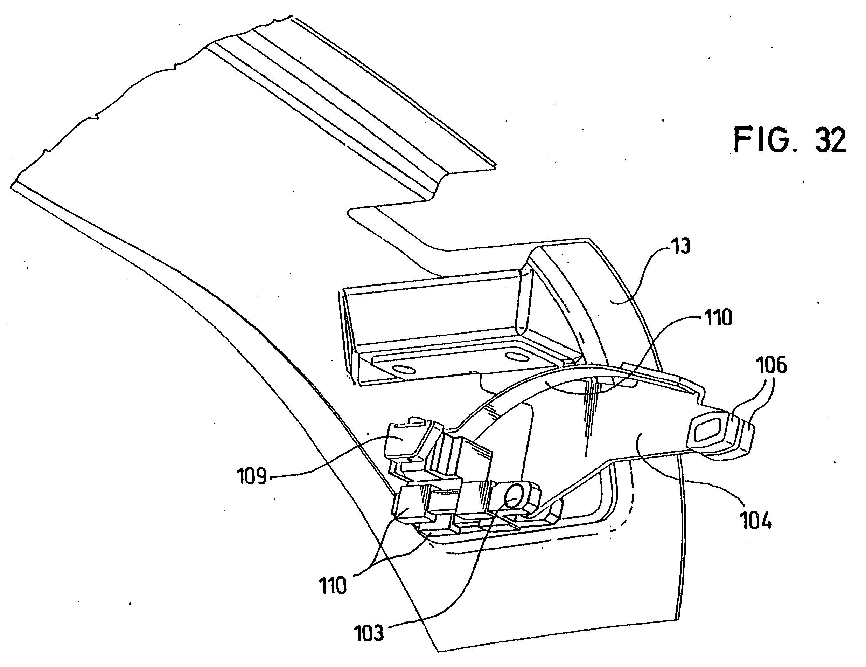

Der Zwischenspriegel 13 ist über eine jeweilige Zwischenspriegellagerung an jedem Dachseitenholm 2 verschiebbar gelagert (siehe Fig. 31 und 32). Jede Zwischenspriegellagerung enthält ein Gleitlager 101, das in einer Führungsbahn 102 der Führungsschiene 10 längs verschiebbar aufgenommen ist. An einer am Vorderende 102 des Gleitlagers 101 in Querrichtung angeordneten Drehachse 103 ist ein Zwischenspriegelträger 104 schwenkbar gelagert, an dem der Zwischenspriegel 13 z. B. durch eine Verschraubung 105 befestigt ist. Der Zwischenspriegelträger 105 enthält ein vorderes Steuergleitlager 106, das in der in Fig. 31 dargestellten Stellung des Zwischenspriegels 13 in einem erhöhten Vorderabschnitt eines nach hinten auf ein Niveau der Führungsbahn 102 absinkenden Auslenkungsbahn 107 verschiebbar aufgenommen ist. In der dargestellten Position hält der Zwischenspriegelträger 104 den Zwischenspriegel 13 in einer zur Führungsschiene 10 bzw. zu dem Dachseitenholm 1 in etwa parallelen Stellung.

Das Gleitlager 101 enthält eine Verriegelungseinrichtung zum Festlegen des Gleitlagers 101 in der in Fig. 31 gezeigten Stellung. Die Verriegelungseinrichtung enthält beispielsweise einen Riegelstein 108, der am Gleitlager 101 in Querrichtung verschiebbar gelagert ist und in der in Fig. 31 gezeigten Riegelstellung in einer Riegelausnehmung (nicht dargestellt) in der Führungsschiene 10 in Blokkiereingriff ist, so daß der Zwischenspriegel 13 gegen eine translatorische Verschiebung an der Führungsschiene 10 festgelegt ist.

Eine Riegelsteinsperre enthält eine Sperrplatte 109, die an einer am Zwischenspriegelträger 104 befestigten Blattfeder 110 angebracht ist und von dieser an der Innen- oder Rückseite des Riegelsteins 108 in Anlage gehalten wird, die seinem Eingriff in der Führungsschiene 10 gegenüber liegt. Der Riegelstein 108 kann unter elastischer Verformung der Blattfeder 110 aus dieser Sperrstellung angehoben werden, so daß der Riegelstein 108 aus der Riegelausnehmung in der Führungsschiene 10 heraustritt und der Blockiereingriff aufgehoben ist.

Während die Dachspitze 12 gegen den Zwischenspriegel 13 gefahren wird, ist dieser noch in der beschriebenen Weise an der Führungsschiene festgelegt. Ein an der Dachspitze 12, dem Zwischenspriegel 13 und an dem Hauptspriegel 5 befestigter Verdeckstoff wird zwischen der Dachspitze 12 und dem Zwischenspriegel 13 in einer gesteuerten Faltenbildung mit translatorischer Z-Faltung gefaltet. Der festgelegte Zwischenspriegel 13 hält den Verdeckstoff zwischen dem Zwischenspriegel 13 und gegebenenfalls einem nächsten Zwischenspriegel oder dem Hauptspriegel 5 gespannt, während unterschiedliche Teilöffnungsstellungen des Faltdaches 1 durch Verschiebung der Dachspitze 12 in Zwischenstellungen bis hin zum Zwischenspriegel 13 einstellbar sind.

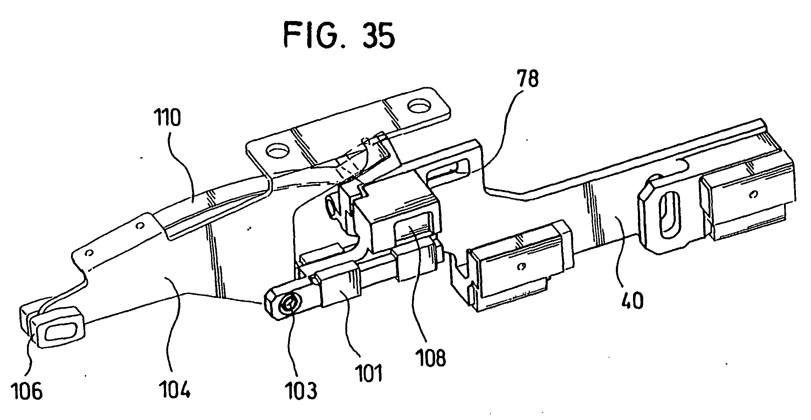

Beim weiteren Öffnen der Faltdaches 1 kommt der nach hinten bewegte Antriebsschlitten 40 zusammen mit der angekoppelten, geneigten Dachspitze 12 in die in Fig. 34 dargestellte Position, in der ein vorderes Riegelsteinfenster 111 des Antriebsschlittens 40 neben dem Riegelstein 108 angeordnet ist (siehe Figur 33). Der Antriebsschlitten 40 hat kurz vor dem Erreichen der in Fig. 34 dargestellten Position die Sperrplatte 109 aus ihrer Sperrposition (siehe Fig. 31) gegen die Kraft der Blattfeder 110 angehoben, so daß sich der Riegelstein 108 aus der Ausnehmung in der Führungsschiene 10 heraus bewegt hat und mit seiner Rückseite in das Riegelsteinfenster 111 am Antriebsschlitten 40 eingreift (siehe auch Fig. 35). Damit ist die Festlegung des Zwischenspriegels 13 an der Führungsschiene 10 gegen translatorische Verschiebung aufgehoben und eine Ankoppelung des Gleitlagers 101 des Zwischenspriegels 13 an den Antriebsschlitten 40 ist erfolgt.

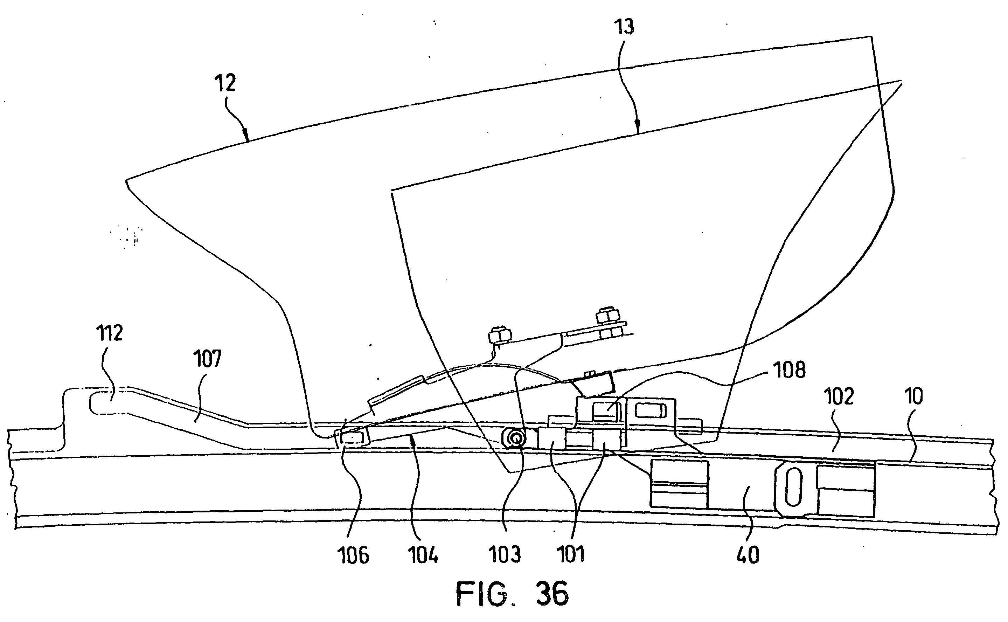

Der weiterbewegte Antriebsschlitten 40 nimmt das Gleitlager 101 des Zwischenspriegels 13 und den Zwischenspriegelträger 104 aus der in Fig. 34 gezeigten Position nach hinten gegen die Dachkassette 6 mit. Dabei bewegt sich das Steuergleitlager 106 anfangs auf einem kurzen zur Führungsschiene 10 parallelen Bahnabschnitt 112 der Auslenkungsbahn 107 (siehe Figur 36), in der es mit seiner Oberseite 113 und seiner Unterseite114, die zueinander parallel liegen, an den entsprechenden Bahnabschnittsbegrenzungen flächig abgestützt und geführt ist. Das Steuergleitlager 106 weist eine zweite Oberseitenfläche 115 und eine zweite Unterseitenfläche 116 auf, die unter einem solchen jeweiligen Winkel zu den angrenzenden Ober- bzw. Unterseiten 113 bzw. 114 stehen, daß sie beim Eintritt des Steuergleitlagers 106 in den linear abfallenden Auslenkabschnitt 107 an den Bahnabschnittseiten flächig anliegen. Während das Steuergleitlager 106 in der Auslenkungsbahn 107 abwärts gleitet, wird der Zwischenspriegelträger 104 verschwenkt, so daß sich der Zwischenspriegel 13 in seiner Neigung der Neigung der Dachspitze 12 anpaßt (siehe Fig. 36). Wenn das Steuergleitlager 106 die untere horizontale Führungsbahn 102 erreicht hat, ist die maximale Neigungsverschwenkung des Zwischenspriegelträgers 104 erreicht. Beim weiteren Verfahren des Antriebsschlittens 40 und des Gleitlagers 101 bleiben die zweite Oberseitenfläche 115 und die Unterseitenfläche 116 des Steuergleitlagers 106 flächig an den Seiten der Führungsbahn 102 in Gleitstützeingriff. Durch die flächige Anlage wird eine Verschleißminderung der Gleitflächen erreicht, so daß die Neigungseinstellung des Zwischenspriegels 13 auch nach längerer Nutzungszeit spielfrei und damit vibrationsfrei bleibt.

In der in Fig. 36 gezeigten Koppelstellung der Dachspitze 12 an dem Zwischenspriegel 13 fahren diese auf den Führungsschienenabschnitt 14 an der Dachkassette 6, so daß die Dachseitenholme 2 eingeschwenkt werden können und das Klappdach nach hinten abgelegt werden kann. Der entgegengesetzte Bewegungsablauf wird beim Schließen des Klappverdecks und des Faltdaches in eine Teilöffnungsstellung, bei der die Dachspitze 12 noch eine Öffnung offen läßt, oder in eine Schließstellung ausgeführt. Das Zurückfahren der verschiebbar gelagerten Elemente, der Dachspitze 12 und wahlweise des zumindest einen Zwischenspriegels 13, in eine Teilöffnungsstellung oder in eine die Dachöffnung vollständig freigebende hintere Stellung sowie das wahlweise gewünschte vollständige Zurückfahren der Dachspitze 12 an die Dachkassette 6 zur Vorbereitung des Zurückklappens des Klappverdecks erfolgt von lediglich einem z. B. an der Dachkassette angeordneten Antriebsmotor und über Antriebskabelverbindungen zu den jeweiligen Antriebsschlitten, die entsprechend ihrer jeweiligen Position in einer Zwangssteuerung sukzessive die jeweiligen Bewegungen steuern. Damit weist dieses Fahrzeugdach eine hohe Betriebssicherheit auf.

Die beschriebenen Antriebs-, Kupplungs- und Verriegelungsmechanismen eignen sich grundsätzlich auch für andere Arten von Fahrzeugdächern wie für Lamellendächer oder Festelementdächer sowohl von Klappverdecken wie auch von festen Fahrzeugdächem mit durch diese genannten Dächer verschließbare und zumindest teilweise freigebbare Dachöffnungen.

### Bezugszeichenliste

- 1: Faltdach
- 2: Dachseitenholm
- 3: Hinterende
- 4: Dachrahmen-Seitenteil
- 5: Hauptspriegel
- 6: Dachkassette
- 7: Vorderende
- 8: Windlauf
- 9: Riegeleinrichtung
- 10: Führungsschiene
- 11: Frontspriegel
- 12: Dachspitze
- 13: Zwischenspriegel
- 14: Führungsschienenabschnitt
- 15: Lenker
- 16: Steuerhebel
- 17: Schlitten
- 18: Schwenklager
- 19: Schwenklager
- 20: Halterung
- 21: Schwenklager
- 22: Schwenklager
- 23: Fortsatz
- 24: Gleitstein
- 25: Kulissenbahn
- 26: Hauptabschnitt
- 27: Steuerabschnitt
- 28: Vorderkante
- 29: Dichtung
- 30: Zentrierzunge
- 31: Zentrierlager
- 32: Lagerteil
- 33: Ebene
- 34: Zentrieraufnahme
- 35: Versteifung
- 36: Innenverkleidung
- 37: Innenverkleidung
- 38: Schutzwulst
- 39: Abrundung
- 40: Antriebsschlitten
- 41: Antriebskabel
- 42: Kniehebel
- 43: Kniehebel
- 44: Lagerbolzen
- 45: Lagerbolzen
- 46: Schlittenteil
- 47: Antriebsschlittenteil
- 48: Schwenkachse
- 49: Führungsbolzen
- 50: Rolle
- 51: Führungsbahn
- 52: Quernut
- 53: Auslenkkurvenabschnitt
- 54: Haltenase
- 55: Öffnung
- 56: Gleitfläche
- 57: Gleitrand
- 58: Auslenkführung
- 59: Zentriereinrichtung
- 60: Verriegelungshaken
- 61: Windlauflager
- 62: Stirnseite
- 63: Zentrierbolzen
- 64: Aufnahmeraum
- 65: Stützteil
- 66: Drehachse
- 67: Riegelhaken
- 68: Riegelaufnahme
- 69: Lagerquerbolzen
- 70: Anlenkstange
- 71: vordere Antriebsstange
- 72: Drehachse
- 73: Drehachse
- 74: Kupplungseinrichtung
- 75: hintere Antriebsstange
- 76: Mitnehmer
- 77: Riegelstein
- 78: Ausnehmung
- 79: Blattfeder
- 80: Riegelsteinsperre
- 81: Kupplungszapfen
- 82: Kupplungsnut
- 83: Ansatz
- 84: Nutbegrenzung
- 85: Zentriernase
- 86: Zentrierausnehmung
- 87: Lagerbock
- 88: Sperrhebel
- 89: Riegelarm
- 90: Auslösearm
- 91: Schwenkachse
- 92: Feder
- 93: Riegelvorsprung
- 94: Ausnehmung
- 95: Betätigungsnase
- 96: Längsnut
- 97: Hinterkante
- 98 99: Dichtungsflansch
- 100: Ausnehmung
- 101: Gleitlager
- 102: Führungsbahn
- 103: Drehachse
- 104: Zwischenspriegelträger
- 105: Verschraubung
- 106: Steuergleitlager
- 107: Auslenkungsbahn
- 108: Riegelstein
- 109: Sperrplatte
- 110: Blattfeder
- 111: vorderes Riegelsteinfenster
- 112: Bahnabschnitt
- 113: Oberseite
- 114: Unterseite
- 115: zweite Oberseitenfläche
- 116: zweite Unterseitenfläche

## Patentansprüche

1. Fahrzeugfaltverdeck mit einer Dachspitze (12), die über einen angetriebenen Schlitten (17) an einer Führungsschiene (10) eines jeweiligen Dachseitenholms (2) verschiebbar gelagert ist und die in einer Schließstellung des Faltverdecks an einen Wrndlauf (8) oder dergleichen anlegbar ist, wobei ein an der jeweiligen Führungsschiene (10) verschiebbar gelagertes Antriebsteil (40) mit dem Schlitten (17) über eine Koppeleinrichtung (42, 43) gekoppelt ist, die während einer Längsverschiebung des Schlittens (17) in einer Offenstellung des Faltverdecks eine starre Koppelung bildet und auf einem letzten Bewegungsweg beim Schließen der Dachspitze (12) durch eine Antriebsbewegungsuntersetzung eine kraftübersetzte Schließbewegung auf den Schlitten (17) überträgt,
**dadurch gekennzeichnet,**
**daß** die Koppeleinrichtung zwei miteinander gelenkig verbundene Kniehebel (42, 43) aufweist, von denen der vordere Kniehebel (42) an dem Schlitten (17) und der hintere Kniehebel (43) an dem Antriebsteil (40) schwenkbar gelagert ist, und daß durch eine zwangsweise eingeleitete Ausschwenkung der Kniehebel (42, 43) an einem mittleren Kniehebelgelenk (48) die Antriebsbewegungsuntersetzung am Schlitten (17) erfolgt.

2. Fahrzeugfaltverdeck nach Anspruch 1,
**dadurch gekennzeichnet, daß** die beiden Kniehebel (42, 43) innerhalb der Führungsschiene (10) verschiebbar geführt sind und hiervon ausgeschwenkt werden.

3. Fahrzeugfaltverdeck nach Anspruch 1 oder 2,
**dadurch gekennzeichnet, daß** ein an der Führungsschiene (10) gebildeter Auslenkkurvenabschnitt (53) das Kniehebelgelenk (48) zwangsweise ausschwenkt.

4. Fahrzeugfaltverdeck nach einem der Ansprüche 1 bis 3,
**dadurch gekennzeichnet, daß** der vordere Kniehebel (42) eine Haltenase (54) für einen Eingriff an einer Abstützung (57) an der Führungsschiene (10) aufweist.

5. Fahrzeugfaltverdeck nach einem der Ansprüche 1 bis 4,
**dadurch gekennzeichnet, daß** ein Lagerbolzen (45) des hinteren Kniehebels (43) in der Schließstellung der Dachspitze (12) in einer Auslenkführung (58) abgestützt angeordnet ist.

6. Fahrzeugfaltverdeck nach einem der Ansprüche 1 bis 5,
**dadurch gekennzeichnet, daß** das Antriebsteil (40) ein Antriebsschlitten (40) ist, der über ein Antriebskabel mit einem Antriebsmotor verbunden ist

7. Fahrzeugfaltverdeck nach einem der Ansprüche 1 bis 6,
**dadurch gekennzeichnet, daß** jede Koppeleinrichtung (42, 43) eine Ausgleichseinrichtung für einen Spielausgleich zwischen den am rechten und am linken Dachseitenholm (2) angeordneten Schlitten (17) aufweist.

8. Fahrzeugfaltverdeck nach einem der Ansprüche 5 bis 7,
**dadurch gekennzeichnet, daß** der Lagerbolzen (45) des hinteren Kniehebels (43) in einer an dem Antriebsteil (40, 47) gebildeten Führung (52) verschiebbar aufgenommen ist, so daß das Antriebsteil bei ruhendem Schlitten (17) eine Ausgleichsbewegung ausführen kann, bei der der Lagerbolzen (45) in der Auslenkführung (58) bewegt ist.

## Claims

1. Motor vehicle folding top having a roof peak (12) which is mounted via a driven carriage (17) on a guide rail (10) of a respective roof side rail (2) such that it can be displaced and which, in a closed position of the folding top, can be placed on a windbreak (8) or the like, a drive part (40) mounted on the respective guide rail (10) such that it can be displaced being coupled to the carriage (17) via a coupling device (42, 43) which, during a longitudinal displacement of the carriage (17), in an open position of the folding top, forms a rigid coupling and, on a last movement path as the roof peak (12) is being closed, transmits a closing movement to the carriage (17) with increased force by means of stepping down the drive movement,
**characterized in that** the coupling device has two toggle levers (42, 43) which are connected to each other in an articulated manner, of which the front toggle lever (42) is pivotably mounted on the carriage (17) and the rear toggle lever (43) is pivotably mounted on the drive part (40), and **in that** the action of stepping down the drive movement on the carriage (17) is brought about as a result of a forcibly initiated outward pivoting movement of the toggle levers (42, 43) at a central toggle-lever joint (48).

2. Motor vehicle folding top according to Claim 1, **characterized in that** the two toggle levers (42, 43) are guided such that they can be displaced within the guide rail (10) and pivoted out by the latter.

3. Motor vehicle folding top according to Claim 1 or 2, **characterized in that** a deflection cam segment (53) formed on the guide rail (10) forcibly pivots the toggle-lever joint (48) out.

4. Motor vehicle folding top according to one of Claims 1 to 3, **characterized in that** the front toggle lever (42) has a retaining lug (54) to engage on a support (57) on the guide rail (10).

5. Motor vehicle folding top according to one of Claims 1 to 4, **characterized in that**, in the closed position of the roof peak (12), a bearing pin (45) of the rear toggle lever (43) is arranged so as to be supported in a deflection guide (58).

6. Motor vehicle folding top according to one of Claims 1 to 5, **characterized in that** the drive part (40) is a drive carriage (40) which is connected to a drive motor via a drive cable.

7. Motor vehicle folding top according to one of Claims 1 to 6, **characterized in that** each coupling device (42, 43) has an equalising device for equalising play between the carriages (17) arranged on the right-hand and on the left-hand roof side rails (2).

8. Motor vehicle folding top according to one of Claims 5 to 7, **characterized in that** the bearing pin (45) of the rear toggle lever (43) is accommodated such that it can be displaced in a guide (52) formed on the drive part (40, 47), so that, when the carriage (17) is at rest, the drive part can carry out an equalising movement, during which the bearing pin (45) is moved in the deflection guide (58).

## Revendications

1. Toit pliant pour véhicule comprenant une extrémité frontale ou pointe de toit (12) qui est montée par le biais d'un coulisseau (17) entraîné de manière à coulisser sur une glissière (10) d'un longeron latéral de toit (2) et qui, lorsque le toit pliant est en position fermée, peut être appliquée contre un auvent (8) ou analogue, sachant qu'un élément d'entraînement (40) monté de façon coulissante sur chaque glissière (10) est accouplé au coulisseau (17) par le biais d'un dispositif d'accouplement (42, 43) qui, durant un déplacement longitudinal du coulisseau (17) alors que le toit pliant est en position ouverte, forme un accouplement rigide et qui, sur un dernier tronçon de déplacement lors de la fermeture de l'extrémité de toit (12), transmet au coulisseau (17) un mouvement de fermeture démultiplié ou multiplié en puissance par un mécanisme de démultiplication ou de réduction du mouvement d'entraînement, **caractérisé en ce que** le dispositif d'accouplement présente deux leviers à genouillère (42, 43) reliés entre eux de manière articulée, dont celui de devant (42) est monté de façon pivotante sur le coulisseau (17) et celui de derrière (43), de façon pivotante sur l'élément d'entraînement (40), et **en ce que** la démultiplication ou de réduction du mouvement d'entraînement du coulisseau (17) est provoquée par un pivotement forcé des leviers à genouillère (42, 43) au niveau d'une articulation centrale ou médiane (48) desdits leviers à genouillère.

2. Toit pliant pour véhicule selon la revendication 1, **caractérisé en ce que** les deux leviers à genouillère (42, 43) sont guidés de façon à pouvoir coulisser à l'intérieur de la glissière (10) et peuvent pivoter hors de celle-ci.

3. Toit pliant pour véhicule selon la revendication 1 ou 2, **caractérisé en ce qu'**un segment de came de déviation (53) ménagé sur la glissière (10) fait pivoter de force l'articulation (48) des leviers à genouillère.

4. Toit pliant pour véhicule selon l'une des revendications 1 à 3, **caractérisé en ce que** le levier à genouillère avant (42) présente un mentonnet (54) destiné à se mettre en prise avec un support (57) sur la glissière (10).

5. Toit pliant pour véhicule selon l'une des revendications 1 à 4, **caractérisé en ce qu'**un axe (45) du levier à genouillère arrière (43) prend appui dans un guide de déviation (58) lorsque l'extrémité de toit (12) est en position fermée.

6. Toit pliant pour véhicule selon l'une des revendications 1 à 5, **caractérisé en ce que** l'élément d'entraînement (40) est un coulisseau d'entraînement (40) qui est relié à un moteur d'entraînement par le biais d'un câble d'entraînement.

7. Toit pliant pour véhicule selon l'une des revendications 1 à 6, **caractérisé en ce que** chaque dispositif d'accouplement (42, 43) présente un dispositif de compensation pour compenser le jeu entre les coulisseaux (17) disposés sur les longerons latéraux (2) droit et gauche du toit.

8. Toit pliant pour véhicule selon l'une des revendications 5 à 7, **caractérisé en ce que** l'axe (45) du levier à genouillère arrière (43) est logé de façon à pouvoir coulisser dans un guide (52) formé sur l'élément d'entraînement (40, 47), si bien que, lorsque le coulisseau (17) est au repos, l'élément d'entraînement peut effectuer un mouvement de compensation à l'occasion duquel l'axe (45) se déplace dans le guide de déviation (58).
